# EUROPEAN PATENT APPLICATION

(11) **EP 4 804 619 A1**
(43) Date of publication of application: **09.09.2026**
(21) Application number: 24896155.9
(22) Date of filing: 30.10.2024
(51) Int. Cl.: H04W 36/00

(54) **COMMUNICATION METHOD AND APPARATUS**

(30) Priority: 30.11.2023 CN 202311637331
(71) Applicant: Huawei Technologies Co., Ltd., Shenzhen, Guangdong 518129 (CN)
(72) Inventor: WANG, Fanfan, Shenzhen, Guangdong 518129 (CN); HU, Xingxing, Shenzhen, Guangdong 518129 (CN); CHEN, Jun, Shenzhen, Guangdong 518129 (CN)
(74) Representative: MERH-IP Matias Erny Reichl Hoffmann Patentanwälte PartG mbB
(86) International application number: PCT/CN2024/128518
(87) International publication number: WO 2025/113064

(57) **Abstract**

This application provides a communication method and apparatus, applied to the communication field. The method includes: A terminal device receives first configuration information from a first access network device, where the first configuration information includes at least one of: a predicted quantity, an initiation condition for predicting the predicted quantity, at least one time period for predicting the predicted quantity, a trigger condition for the predicted quantity, or a trigger condition for handover, and the predicted quantity includes one of the following unintended events: an RLF in a serving cell, a HOF in at least one neighboring cell, an RLF in the at least one neighboring cell, ping-pong handover in the at least one neighboring cell, or unnecessary handover in the at least one neighboring cell; and the terminal device predicts a first prediction result based on the first configuration information. In this solution, a target cell can be determined based on the first prediction result, so that an occurrence probability of an unintended event can be reduced in a mobility management process, thereby improving user experience and network performance.

## Description

This application claims priority to Chinese Patent Application No. 202311637331.1, filed with the China National Intellectual Property Administration on November 30, 2023, and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

In mobility management, a serving cell of a terminal device is changed, so that the terminal device can enjoy services uninterruptedly while moving within a network coverage range. Mobility management of a terminal device in a radio resource control (radio resource control, RRC) connected state is referred to as handover, and mobility management of a terminal device in an RRC idle state or an RRC inactive (inactive) state is referred to as cell reselection.

In a handover process, a target cell may be determined based on a measurement result. In a basic handover procedure, a terminal device evaluates that a condition for reporting a measurement report is met, and reports the measurement report to a network side. The network side performs handover decision based on the measurement report reported by the terminal device, to determine a target cell, and requests access to the target cell from a target base station to which the target cell belongs. The target base station performs admission control, allows the terminal device to access the target cell, and allocates radio resources to the terminal device. The network side includes, in a handover command, configuration information of the target cell returned by the target base station, and sends the handover command to the terminal device. The terminal device accesses the target cell based on the handover command. In a conditional handover procedure, a network side sends, to a terminal device in advance, a handover command including configuration information of one or more candidate cells and a trigger condition for handover execution. The terminal device determines a target cell based on whether a measurement result of the candidate cell meets the trigger condition for handover execution.

In current solutions for determining the target cell based on the measurement result, it is not possible to avoid radio link failures (radio link failure, RLF) in a serving cell before handover execution, and it cannot be ensured that a terminal device successfully accesses the target cell/it cannot be ensured that a handover failure does not occur in a handover process. It is even less possible that an unintended event like a fast RLF, ping-pong handover, or unnecessary handover does not occur after the terminal device successfully accesses the target cell.

### SUMMARY

This application provides a communication method and apparatus, so that an occurrence probability of an unintended event can be reduced in a mobility management process, thereby improving user experience and network performance.

According to a first aspect, a communication method is provided. The method may be performed by a terminal device or a chip or a chip system in the terminal device. The method includes: A terminal device receives first configuration information from a first access network device, where the first configuration information includes at least one of: a predicted quantity, an initiation condition for predicting the predicted quantity, at least one time period for predicting the predicted quantity, a trigger condition for the predicted quantity, or a trigger condition for handover, and the predicted quantity includes one of the following unintended events: a radio link failure RLF in a serving cell, a handover failure HOF in at least one neighboring cell, an RLF in the at least one neighboring cell, ping-pong handover in the at least one neighboring cell, or unnecessary handover in the at least one neighboring cell; and the terminal device predicts a first prediction result based on the first configuration information.

According to the foregoing technical solution, the terminal device can predict the first prediction result (whether the unintended event occurs, or an occurrence probability of the unintended event, or a non-occurrence probability of the unintended event within at least one future time period; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the handover, and a time period in which the trigger condition for the handover is met and that respectively corresponds to each of the at least one second candidate cell) based on the first configuration information from the first access network device; and a target cell of the handover can be determined based on the first prediction result, so that the occurrence probability of the unintended event can be reduced in a mobility management process, thereby improving a handover success rate, user experience, and network performance.

With reference to the first aspect, in some implementations of the first aspect, the method further includes: The terminal device sends the first prediction result to the first access network device; the terminal device receives a handover command from the first access network device, where the handover command indicates to perform handover to a target cell within a target time period, the at least one neighboring cell includes the target cell, and the at least one time period includes the target time period; and the terminal device is handed over from the serving cell to the target cell within the target time period based on the handover command. This implementation is applicable to a basic handover procedure.

With reference to the first aspect, in some implementations of the first aspect, the method further includes: The terminal device determines, based on the first prediction result, a target cell that meets the trigger condition for the predicted quantity and a target time period in which the trigger condition for the predicted quantity is met and that corresponds to the target cell; or determines a target cell that meets the trigger condition for the handover and a target time period in which the trigger condition for the handover is met and that corresponds to the target cell; and the terminal device is handed over from the serving cell to the target cell within the target time period. This implementation is applicable to a conditional handover procedure.

With reference to the first aspect, in some implementations of the first aspect, the first prediction result includes: whether the unintended event occurs, or an occurrence probability of the unintended event, or a non-occurrence probability of the unintended event within the at least one time period in the serving cell and/or the at least one neighboring cell; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the handover, and a time period in which the trigger condition for the handover is met and that respectively corresponds to each of the at least one second candidate cell, where the at least one neighboring cell include the at least one first candidate cell.

For example, the first configuration information includes the predicted quantity, the initiation condition for predicting the predicted quantity, and the at least one time period for predicting the predicted quantity. The first prediction result includes whether the unintended event occurs, or the occurrence probability of the unintended event, or the non-occurrence probability of the unintended event within the at least one time period in the serving cell and/or the at least one neighboring cell.

For example, the first configuration information includes the predicted quantity, the initiation condition for predicting the predicted quantity, the at least one time period for predicting the predicted quantity, and the trigger condition for the predicted quantity. The first prediction result includes the identifier of the at least one first candidate cell that meets the trigger condition for the predicted quantity, and the time period in which the trigger condition for the predicted quantity is met and that respectively corresponds to each of the at least one first candidate cell.

For example, the first configuration information includes the predicted quantity, the initiation condition for predicting the predicted quantity, the at least one time period for predicting the predicted quantity, the trigger condition for the predicted quantity, and the trigger condition for the handover. The first prediction result includes the identifier of the at least one second candidate cell that meets the trigger condition for the handover, and the time period in which the trigger condition for the handover is met and that respectively corresponds to each of the at least one second candidate cell.

With reference to the first aspect, in some implementations of the first aspect, the initiation condition for predicting the predicted quantity includes: event-triggered one-time prediction, event-triggered periodical prediction, or non-event-triggered periodical prediction.

With reference to the first aspect, in some implementations of the first aspect, the trigger condition for the predicted quantity includes: the unintended event does not occur, or the occurrence probability of the unintended event is less than or equal to a first threshold, or the non-occurrence probability of the unintended event is greater than or equal to a second threshold.

With reference to the first aspect, in some implementations of the first aspect, the trigger condition for the handover includes: that one or more predicted quantities correspondingly meet a combination of respective trigger conditions of the predicted quantities; or that a weighted sum of occurrence probabilities that respectively correspond to a plurality of predicted quantities is less than or equal to a third threshold; or that a weighted sum of non-occurrence probabilities that respectively correspond to a plurality of predicted quantities is greater than or equal to a fourth threshold.

According to a second aspect, a communication method is provided. The method may be performed by a first access network device or a chip or a chip system in the first access network device. The method includes: The first access network device sends first configuration information to a terminal device, where the first configuration information includes at least one of: a predicted quantity, an initiation condition for predicting the predicted quantity, at least one time period for predicting the predicted quantity, a trigger condition for the predicted quantity, or a trigger condition for handover, and the predicted quantity includes one of the following unintended events: an RLF in a serving cell, a HOF in at least one neighboring cell, an RLF in the at least one neighboring cell, ping-pong handover in the at least one neighboring cell, or unnecessary handover in the at least one neighboring cell; the first access network device receives a first prediction result from the terminal device, where the first prediction result is predicted based on the first configuration information; and the first access network device sends a handover command to the terminal device based on the first prediction result, where the handover command indicates to perform handover to a target cell within a target time period.

The method provided in the second aspect is a method that is on a first access network device side and that corresponds to the first aspect. For beneficial effects thereof, refer to the first aspect.

With reference to the second aspect, in some implementations of the second aspect, sending the handover command to the terminal device based on the first prediction result includes: sending a handover request message to a second access network device, where the handover request message includes a part or all of the first prediction result, and the part or all of the first prediction result may include at least one of the following: at least one predicted target cell, at least one time period corresponding to the predicted target cell, and a predicted probability that at least one unintended event occurs or does not occur within the time period corresponding to the target cell; receiving a handover request acknowledge message from the second access network device; and sending the handover command to the terminal device, where the handover command includes indication information that indicates to perform handover to the target cell within the target time period.

With reference to the second aspect, in some implementations of the second aspect, the first prediction result includes: whether the unintended event occurs, or an occurrence probability of the unintended event, or a non-occurrence probability of the unintended event within the at least one time period in the serving cell and/or the at least one neighboring cell; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the handover, and a time period in which the trigger condition for the handover is met and that respectively corresponds to each of the at least one second candidate cell, where the serving cell and the at least one neighboring cell include the at least one first candidate cell.

With reference to the second aspect, in some implementations of the second aspect, the initiation condition for predicting the predicted quantity includes: event-triggered one-time prediction, event-triggered periodical prediction, or non-event-triggered periodical prediction.

With reference to the second aspect, in some implementations of the second aspect, the trigger condition for the predicted quantity includes: the unintended event does not occur, or the occurrence probability of the unintended event is less than or equal to a first threshold, or the non-occurrence probability of the unintended event is greater than or equal to a second threshold.

With reference to the second aspect, in some implementations of the second aspect, the trigger condition for the handover includes: that one or more predicted quantities correspondingly meet a combination of respective trigger conditions of the predicted quantities; or that a weighted sum of occurrence probabilities that respectively correspond to a plurality of predicted quantities is less than or equal to a third threshold; or that a weighted sum of non-occurrence probabilities that respectively correspond to a plurality of predicted quantities is greater than or equal to a fourth threshold.

According to a third aspect, a communication method is provided. The method may be performed by a terminal device or a chip or a chip system in the terminal device. The method includes: The terminal device receives second configuration information from a first access network device, where the second configuration information includes at least one of: a predicted quantity, an initiation condition for predicting the predicted quantity, at least one time period for predicting the predicted quantity, a trigger condition for the predicted quantity, or a trigger condition for cell reselection, and the predicted quantity includes one of the following unintended events: a radio resource control RRC connection setup failure in a serving cell, an RRC connection resume failure in the serving cell, an RLF after RRC connection setup in the serving cell, an RRC connection setup failure in at least one neighboring cell, an RRC connection resume failure in the at least one neighboring cell, or an RLF after RRC connection setup in the at least one neighboring cell; and the terminal device predicts a second prediction result based on the second configuration information.

According to the foregoing technical solution, the terminal device can predict the second prediction result (whether the unintended event occurs, or an occurrence probability of the unintended event, or a non-occurrence probability of the unintended event within at least one future time period; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the cell reselection, and a time period in which the trigger condition for the cell reselection is met and that respectively corresponds to each of the at least one second candidate cell) based on the second configuration information from a second access network device; and a target cell of the cell reselection can be determined based on the second prediction result, so that the occurrence probability of the unintended event can be reduced in a mobility management process, thereby improving an RRC connection setup success rate/an RRC connection resume success rate, user experience, and network performance.

With reference to the third aspect, in some implementations of the third aspect, the method further includes: The terminal device determines, based on the second prediction result, a target cell that meets the trigger condition for the predicted quantity and a target time period in which the trigger condition for the predicted quantity is met and that corresponds to the target cell; or determines a target cell that meets the trigger condition for the cell reselection and a target time period in which the trigger condition for the cell reselection is met and that corresponds to the target cell; and the terminal device performs reselection from the serving cell to the target cell within the target time period.

With reference to the third aspect, in some implementations of the third aspect, the second prediction result includes: whether the unintended event occurs, or an occurrence probability of the unintended event, or a non-occurrence probability of the unintended event within the at least one time period in the serving cell and/or the at least one neighboring cell; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the cell reselection, and a time period in which the trigger condition for the cell reselection is met and that respectively corresponds to each of the at least one second candidate cell, where the serving cell and the at least one neighboring cell include the at least one first candidate cell.

For example, the second configuration information includes the predicted quantity, the initiation condition for predicting the predicted quantity, and the at least one time period for predicting the predicted quantity. The second prediction result includes whether the unintended event occurs, or the occurrence probability of the unintended event, or the non-occurrence probability of the unintended event within the at least one time period in the serving cell and/or the at least one neighboring cell.

For example, the second configuration information includes the predicted quantity, the initiation condition for predicting the predicted quantity, the at least one time period for predicting the predicted quantity, and the trigger condition for the predicted quantity. The second prediction result includes the identifier of the at least one first candidate cell that meets the trigger condition for the predicted quantity, and the time period in which the trigger condition for the predicted quantity is met and that respectively corresponds to each of the at least one first candidate cell.

For example, the second configuration information includes the predicted quantity, the initiation condition for predicting the predicted quantity, the at least one time period for predicting the predicted quantity, the trigger condition for the predicted quantity, and the trigger condition for the cell reselection. The second prediction result includes the identifier of the at least one second candidate cell that meets the trigger condition for the cell reselection, and the time period in which the trigger condition for the cell reselection is met and that respectively corresponds to each of the at least one second candidate cell.

With reference to the third aspect, in some implementations of the third aspect, the initiation condition for predicting the predicted quantity includes: event-triggered one-time prediction, event-triggered periodical prediction, or non-event-triggered periodical prediction.

With reference to the third aspect, in some implementations of the third aspect, the trigger condition for the predicted quantity includes: the unintended event does not occur, or the occurrence probability of the unintended event is less than or equal to a first threshold, or the non-occurrence probability of the unintended event is greater than or equal to a second threshold.

With reference to the third aspect, in some implementations of the third aspect, the trigger condition for the cell reselection includes: that one or more predicted quantities correspondingly meet a combination of respective trigger conditions of the predicted quantities; or that a weighted sum of occurrence probabilities that respectively correspond to a plurality of predicted quantities is less than or equal to a third threshold; or that a weighted sum of non-occurrence probabilities that respectively correspond to a plurality of predicted quantities is greater than or equal to a fourth threshold; or that a weighted sum of occurrence probabilities or non-occurrence probabilities that respectively correspond to a plurality of predicted quantities is considered during calculation according to a cell reselection R criterion/S criterion.

According to a fourth aspect, a communication method is provided. The method may be performed by a first access network device or a chip or a chip system in the first access network device. The method includes: The first access network device sends second configuration information to a terminal device, where the second configuration information includes at least one of: a predicted quantity, an initiation condition for predicting the predicted quantity, at least one time period for predicting the predicted quantity, a trigger condition for the predicted quantity, or a trigger condition for cell reselection, and the predicted quantity includes one of the following unintended events: an RRC connection setup failure in a serving cell, an RRC connection resume failure in the serving cell, an RLF after RRC connection setup in the serving cell, an RRC connection setup failure in at least one neighboring cell, an RRC connection resume failure in the at least one neighboring cell, or an RLF after RRC connection setup in the at least one neighboring cell.

The method provided in the fourth aspect is a method that is on a first access network device side and that corresponds to the third aspect. For beneficial effects thereof, refer to the third aspect.

According to a fifth aspect, a communication apparatus is provided. The apparatus may be used in the terminal device according to the first aspect. The apparatus includes: a transceiver unit, configured to implement a receiving function and a sending function in the method according to the first aspect; and a processing unit, configured to implement a prediction function and the like in the method according to the first aspect.

According to a sixth aspect, a communication apparatus is provided. The apparatus may be used in the first access network device according to the second aspect. The apparatus includes a transceiver unit, configured to implement a receiving function and a sending function in the method according to the second aspect.

According to a seventh aspect, a communication apparatus is provided. The apparatus may be used in the terminal device according to the third aspect. The apparatus includes: a transceiver unit, configured to implement a receiving function and a sending function in the method according to the third aspect; and a processing unit, configured to implement a prediction function and the like in the method according to the third aspect.

According to an eighth aspect, a communication apparatus is provided. The apparatus may be used in the first access network device according to the fourth aspect. The apparatus includes a transceiver unit, configured to implement a receiving function and a sending function in the method according to the fourth aspect.

According to a ninth aspect, a communication apparatus is provided, and includes a processor and a memory. The memory is configured to store a computer program, and the processor is configured to execute the computer program stored in the memory, to enable the communication apparatus to perform the method according to the foregoing first aspect to the fourth aspect or any possible implementation of the first aspect to the fourth aspect.

According to a tenth aspect, a communication apparatus is provided, and includes an input/output interface and a logic circuit. The input/output interface is configured to obtain input information and/or output information. The logic circuit is configured to perform the method according to the foregoing first aspect to the fourth aspect or any possible implementation of the first aspect to the fourth aspect, and process and/or generate the output information based on the input information.

According to an eleventh aspect, a communication system is provided, and includes a terminal device and a first access network device. The terminal device is configured to implement the method according to the foregoing first aspect (the third aspect) or any possible implementation of the first aspect (the third aspect), and the first access network device is configured to implement the method according to the foregoing second aspect (the fourth aspect) or any possible implementation of the second aspect (the fourth aspect).

According to a twelfth aspect, a computer-readable storage medium is provided. The computer-readable medium stores a computer program. When the computer program is run on a computer, the computer is enabled to perform the method according to the foregoing first aspect to the fourth aspect or any one of the possible implementations of the first aspect to the fourth aspect.

According to a thirteenth aspect, a computer program product including instructions is provided. When the instructions are executed by a computer, a communication apparatus is enabled to implement the method according to the foregoing first aspect to the fourth aspect or any one of the possible implementations of the first aspect to the fourth aspect.

The solutions provided in the foregoing fifth aspect to the thirteenth aspect are used to implement or cooperate to implement the method provided in the foregoing first aspect, or the second aspect, or the third aspect, or the fourth aspect, and therefore can achieve a same or corresponding beneficial effect as that in the first aspect, or the second aspect, or the third aspect, or the fourth aspect. Details are not described herein again.

### BRIEF DESCRIPTION OF DRAWINGS

FIG. 1 is a diagram of an architecture of a communication system to which an embodiment of this application is applicable;
FIG. 2 is a diagram of an architecture of CU-DU;
FIG. 3 is a diagram of an access network device in an ORAN system;
FIG. 4 is a diagram of a framework of AI/ML application in NR;
FIG. 5 is a diagram of an unintended event occurring in a measurement-based handover process;
FIG. 6 is a diagram of an unintended event occurring in a measurement-based cell reselection process;
FIG. 7 is a schematic interaction flowchart of a communication method according to an embodiment of this application;
FIG. 8 is a schematic interaction flowchart of another communication method according to an embodiment of this application;
FIG. 9 is a block diagram of a communication apparatus according to an embodiment of this application;
FIG. 10 is a block diagram of another communication apparatus according to an embodiment of this application;
FIG. 11 is a block diagram of another communication apparatus according to an embodiment of this application;
FIG. 12 is a block diagram of another communication apparatus according to an embodiment of this application; and
FIG. 13 is a block diagram of another communication apparatus according to an embodiment of this application.

### DESCRIPTION OF EMBODIMENTS

The following describes technical solutions of this application with reference to the accompanying drawings.

Embodiments of this application may be applied to various communication systems, for example, a wireless local area network (wireless local area network, WLAN) system, a narrow band-internet of things (narrow band-internet of things, NB-IoT) system, a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, an LTE system, satellite communication, a 5G communication system, a 6^{th}-generation (6^{th}-generation, 6G) communication system, or a new communication system emerging in the future.

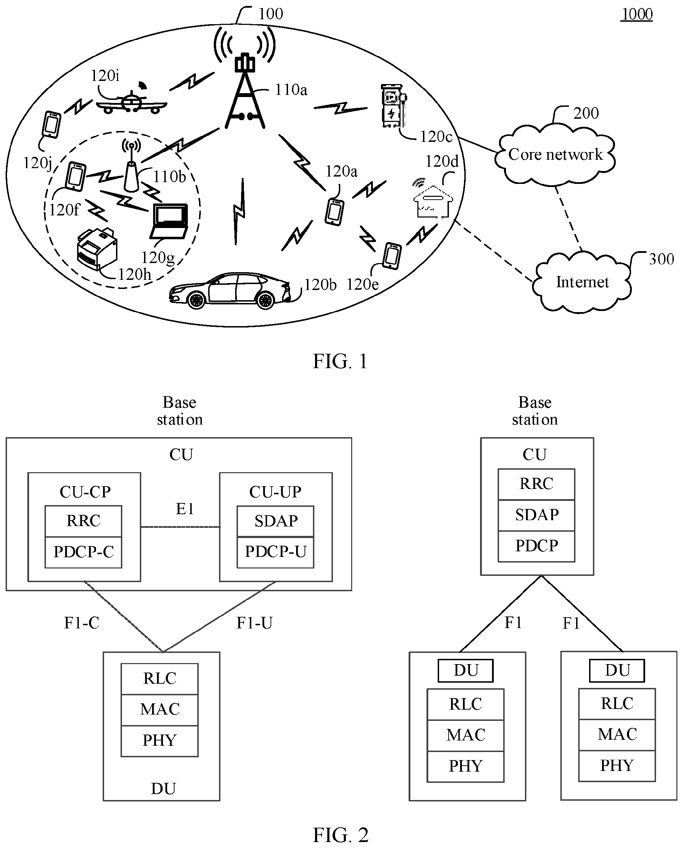

FIG. 1 is a diagram of an architecture of a communication system to which an embodiment of this application is applicable. The communication system includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network.

The RAN 100 may be a cellular system related to the 3^{rd} generation partnership project (3^{rd} generation partnership project, 3GPP), for example, a 4G mobile communication system, a 5G mobile communication system, a non-terrestrial network (non-terrestrial network, NTN) system, or a future-oriented evolved system (for example, a 6G mobile communication system). The RAN 100 may alternatively be an open radio access network (open RAN, O-RAN or ORAN), a cloud radio access network (cloud radio access network, CRAN), or a wireless fidelity (wireless fidelity, Wi-Fi) system, or may be a communication system integrating two or more of the foregoing systems.

The terminal 120 in embodiments of this application may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

The RAN node 110 in embodiments of this application sometimes may also be referred to as an access network device, a RAN entity, an access node, or the like, and forms a part of the communication system, to help the terminal implement radio access. A plurality of RAN nodes 110 in the communication system 1000 may be nodes of a same type, or may be nodes of different types. In some scenarios, roles of the RAN node 110 and the terminal 120 are relative. For example, a network element 120i in FIG. 1 may be a helicopter or an uncrewed aerial vehicle, and may be configured as a mobile base station. For terminals 120j that access the RAN 100 via the network element 120i, the network element 120i is a base station, but for a base station 110a, the network element 120i is a terminal. Sometimes, the RAN node 110 and the terminal 120 are both referred to as communication apparatuses. For example, network elements 110a and 110b in FIG. 1 may be understood as communication apparatuses having a base station function, and network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). A CU node and a DU node split protocol layers of a gNB. Functions of a part of protocol layers are controlled by the CU in a centralized manner, functions of a part or all of remaining protocol layers are distributed in the DU, and the CU controls the DU in a centralized manner. In an implementation, the CU is deployed with an RRC layer, a packet data convergence protocol (packet data convergence protocol, PDCP) layer, and a service data adaptation protocol (service data adaptation protocol, SDAP) layer in a protocol stack; and the DU is deployed with a radio link control (radio link control, RLC) layer, a media access control (media access control, MAC) layer, and a physical layer (physical layer, PHY) in the protocol stack. Therefore, the CU has RRC, PDCP, and SDAP processing capabilities. The DU has RLC, MAC, and PHY processing capabilities. It may be understood that the foregoing function division is merely an example, and constitutes no limitation on the CU and the DU. The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a core network device is a device in a core network (core network, CN) that provides service support for a terminal. Currently, some examples of the core network device are: an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal. The SMF entity may be responsible for session management, for example, user session establishment. The UPF entity may be a functional entity on a user plane, and is mainly responsible for connecting to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element or an SMF functional entity.

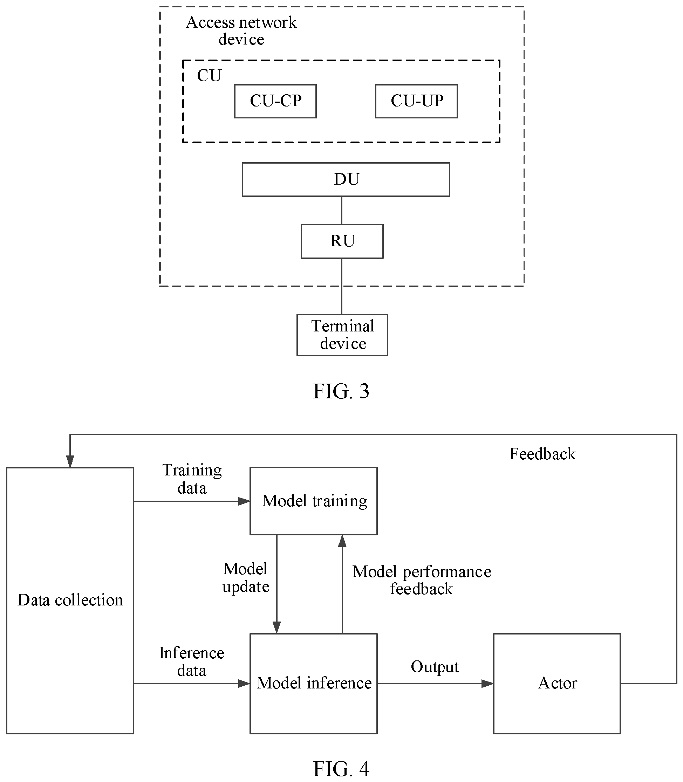

FIG. 2 is a diagram of an architecture of CU-DU. The CU is connected to the DU through an F1 interface. The CU indicates that a gNB is connected to a core network through an Ng interface. FIG. 3 is a diagram of an access network device in an ORAN system. The access network device includes one or more CUs, DUs, and RUs.

For a correspondence between the access network device (network element modules) in the ORAN system and protocol layer functions that can be implemented by the access network device, refer to Table 1.

**Table 1**

| Network element name | English full name | Description |
|---|---|---|
| O-CU | O-RAN central unit (O-RAN central unit) or O-RAN control unit (O-RAN control unit) | Is configured to implement functions of an RRC layer, a PDCP layer, an SDAP layer, and other control functions in the 3GPP standard. |
| O-CU-CP | O-RAN central unit control plane (O-RAN central unit control plane) or O-RAN control unit control plane (O-RAN control unit control plane) | Is similar to a CU-CP in an NR system, and is configured to implement a function of an RRC layer and a control plane function of a PDCP layer. |
| O-CU-UP | O-RAN central unit user plane (O-RAN central unit user plane) or O-RAN control unit user plane (O-RAN control unit user plane) | Is similar to a CU-UP in an NR system, and is configured to implement a function of an SDAP layer and a user plane function of a PDCP layer. |
| O-DU | ORAN distributed unit (ORAN distributed unit) | Is configured to implement a radio link control (radio link control, RLC) layer, a media access control (media access control, MAC) layer, and a higher layer (near a MAC layer) of a physical (PHY) layer in the 3GPP standard based on lower-layer function division, where the function of the higher layer of the physical layer includes one or more of the following: forward error correction (forward error correction, FEC) encoding/decoding, scrambling/descrambling, or modulation/demodulation. |
| O-RU | ORAN radio unit (ORAN radio unit) | Is configured to implement a lower-layer (near radio frequency) function and a radio frequency function of a PHY in the 3GPP standard based on lower-layer function division, where the lower-layer function of the physical layer includes one or more of the following: fast Fourier transform (fast Fourier transform, FFT)/inverse fast Fourier transformation (inverse fast Fourier transformation, iFFT), digital beamforming, extraction and filtering of a physical random access channel (physical random access channel, PRACH), or the like; and is similar to a TRP or an RRH in 3GPP, but includes the lower-layer function of the PHY, for example, the FFT/iFFT or the extraction of the PRACH |

To facilitate understanding of embodiments of this application, the following briefly describes technical solutions related to embodiments of this application.

### I. Artificial intelligence (artificial intelligence, AI)/Machine learning (machine learning, ML)

Artificial intelligence means using computers to simulate (such as learn, infer, think, and plan) and extend human consciousness, a thinking information process, and intelligent behavior, to enable the computers to implement higher-level application. Machine learning refers to extracting, from a series of raw data, features that can be identified by people, and then learning the features to finally generate a model. Currently, it is proposed to apply the AI/ML to new radio (new radio, NR), to perform intelligent data collection and analysis, so as to improve network performance and user experience. FIG. 4 is a diagram of a framework of AI/ML application in NR.

A data collection (data collection) function stores measurement from different network entities such as a gNB, a gNB-CU, a gNB-DU, an operation, administration, and maintenance (operation, administration, and maintenance, OAM) network element, and a terminal device, and feedback of an actor (actor); and provides data for a model training (model training) function and a model inference (model inference) function. In the model training function and the model inference function, data preparation may need to be performed on the data first, for example, data preprocessing, cleansing, format unification, and conversion. The model training function is for performing AI/ML model training, model verification, and model test on the data provided by the data collection function. Model performance measurement may be generated during the model test. The model training function is for providing an initial or updated AI/ML model for the model inference function through a model application/update mechanism. The model inference function is for using the AI/ML model to provide, based on the data provided by the data collection function, model inference output, such as prediction or decision, to guide a network to perform policy adjustment, and also provide model performance feedback for the model training function based on the data collection function. The actor receives an output result of the model inference function, and is responsible for performing related policy adjustment. The actor may be the foregoing listed network entity or an independent entity. In addition, after a related policy is applied, specific network performance, for example, various performance parameters, is input into the data collection function again, to evaluate performance and related impact of training data, inference data, or the AI/ML model.

An artificial intelligence system has various application scenarios and functions in NR, for example, energy saving, load balancing, and mobility parameter optimization.

### II. Conventional handover, conditional handover (conditional handover, CHO), dual active protocol stack (dual active protocol stack, DAPS) handover, and multi-radio dual connectivity (multi-radio dual connectivity, MR-DC)

### 1. Conventional handover

In a conventional handover procedure of a mobile communication system, mobility management of a terminal device in a connected state is controlled by a network device. A source base station sends an RRC reconfiguration message including a handover command, to indicate a target cell to which the terminal device is to be handed over and how to perform handover. Specifically, after receiving the RRC reconfiguration message including the handover command, the terminal device immediately releases a source cell, stops uplink/downlink data transmission with the source cell, and accesses the target cell based on content included in the handover command. Therefore, successful sending of the handover command is a necessary condition for ensuring successful handover in a conventional handover mechanism.

### 2. Conditional handover

In a conventional technology, a conditional handover mechanism is proposed to improve a handover success rate. Specifically, when source link quality is good, a source base station sends an RRC reconfiguration message including CHO configuration information to a terminal device, where the CHO configuration information may include configuration information, an execution trigger condition, measurement configuration, and the like of one or more candidate cells. After receiving the CHO configuration information, the terminal device does not immediately initiate execution of a handover action on any candidate cell, but continues to maintain a connection and data transmission with the source base station. After finding, from the candidate cells, a candidate cell that meets the execution trigger condition, the terminal device may autonomously determine a target cell and execute handover. By contrast, in conventional NR handover, after receiving a handover command, a terminal device may immediately execute handover to a target cell indicated by the handover command.

### 3. DAPS handover

In the conventional technology, a DAPS handover mechanism is proposed to reduce handover interruption time. The handover interruption time may be understood as a time period in which a terminal device cannot perform data transmission with any base station during handover. Specifically, a source base station indicates a target cell to the terminal device by using an RRC reconfiguration message including a handover command, and the terminal device accesses the target cell based on content included in the handover command. A difference from conventional NR handover is that in a DAPS handover execution period (a period of accessing the target cell), the terminal device may continue to perform data transmission with a source cell until the terminal device sets up a connection and performs data transmission with the target cell. Specifically, within short time, the terminal device may simultaneously receive data from both the source cell and the target cell, or may simultaneously send data to both the source cell and the target cell:

The terminal device continues to receive downlink data from the source cell until the target cell indicates the terminal device to release the source cell; or
the terminal device continues to send uplink data to the source cell until the terminal device successfully performs random access to the target cell.

The DAPS handover has a high requirement on a capability of the terminal device. From the perspective of the terminal device, two active protocol stacks exist in the terminal device in a DAPS handover process. One active protocol stack is used for transmission and reception of user plane data of the target cell, and the other active protocol stack is used for transmission and reception of user plane data of the source cell. A user plane protocol stack of a source side and a user plane protocol stack of a target side use a common PDCP entity, so that the source side and the target side have a common reordering and deduplication function.

### 4. Multi-radio dual connectivity

In a wireless network, one terminal device may communicate with a plurality of base stations, which is dual connectivity (dual connectivity, DC), and is also referred to as multi-radio dual connectivity MR-DC. The plurality of base stations may be base stations that belong to a same radio access technology (radio access technology, RAT) (for example, all are 4G base stations or all are 5G base stations), or the plurality of base stations may be base stations that belong to different RATs (for example, one is a 4G base station, and another is a 5G base station). A network side may provide a communication service for the terminal device by using resources of the plurality of base stations, to provide high-rate transmission for the terminal device. In DC, a base station that has control plane signaling exchange with a core network is referred to as a master node (master node, MN), and another base station is referred to as a secondary node (secondary node, SN). In MR-DC, there is a primary cell (primary cell, PCell) in the master node, and there is a primary secondary cell (primary secondary cell, PSCell) in the secondary node. The primary cell is a cell that is deployed at a main frequency and that is indicated by a terminal device as a primary cell in an initial connection setup initiation process, a connection re-setup initiation process, or a handover process in the cell. The primary secondary cell is a cell, of a secondary node, in which the terminal device initiates a random access procedure, or a cell in which the terminal device skips a random access procedure and initiates data transmission in a secondary node change process, or a cell of a secondary node in which the terminal device initiates random access in a synchronous reconfiguration process.

Conventional primary secondary cell addition/change: When the terminal device is in single connection (not configured with a PSCell), a network side triggers addition of the PSCell, in other words, the network side directly indicates a target PSCell cell to the terminal device, the terminal device adds the target PSCell cell, and the network side configures the MR-DC for the terminal device, where the addition of the PSCell can only be triggered by an MN; or when the terminal device is configured with a PSCell, due to mobility of the terminal device, the network side triggers a change of the PSCell, which may be triggered by an MN or an SN, in other words, the network side directly indicates a target PSCell cell to the terminal device, and the terminal device is handed over from a current PSCell to the target PSCell.

A CHO mechanism is combined with a primary secondary cell addition/change scenario, and a mechanism of conditional primary secondary cell addition/change (conditional PSCell addition/change, CPAC) is introduced. A corresponding trigger node (MN/SN) may prepare a plurality of candidate PSCell cells in advance. The network side sends CPAC configuration information to the terminal device, where the CPAC configuration information includes candidate cell information, measurement configuration, and a trigger condition for handover. The candidate cell information may include identification information of the candidate PSCell cells and configuration parameter information of the candidate PSCell cells. Identification information of a cell may be a cell global identifier (cell global identifier, CGI), or a physical cell identifier (physical cell identifier, PCI) and frequency information. After the terminal device receives the CAPC configuration information, if finding that signal quality of a candidate cell meets the trigger condition for the handover, the terminal device uses the candidate cell as a target cell, access the target cell, and executes a PSCell addition or change procedure.

### III. Mobility management

In mobility management, a serving cell of a terminal device is changed, so that the terminal device can enjoy services uninterruptedly while moving within a network coverage range. The mobility management is based on an RRC state of the terminal device, and mobility management in different RRC states is classified into the following:
mobility management in an RRC connected state: handover;
mobility management in an RRC idle state: cell reselection; and
mobility management in an RRC inactive (inactive) state: cell reselection.

In the RRC connected state, the terminal device sets up an RRC connection with a base station. In the RRC idle state, the terminal device does not set up an RRC connection with the base station. In the RRC inactive state, the terminal device suspends data processing, but the base station still maintains context information of the terminal device. Simply, an air interface mode of the terminal device in the RRC inactive state is similar to an air interface mode of the terminal device in the RRC idle state. However, from the perspective of a core network side, the terminal device in the RRC inactive state is still in a connection management (connection management, CM) connected state.

### IV. Measurement-based handover mechanism

Mobility management in an RRC connected state is referred to as handover. The mobility management includes primary cell handover and primary secondary cell addition/change. In a handover process, a target cell may be determined based on a measurement report of a terminal device, or a target cell may be determined not based on a measurement report of a terminal device. A handover mechanism that is not based on the measurement report of the terminal device is generally not used, as uncertain signal quality of the target cell causes a high risk of access failure. Therefore, only the measurement-based handover mechanism is discussed. A manner of executing handover to access the target cell may be based on random access, or may be skipping random access (random access-free), to perform uplink/downlink data transmission.

In a basic handover procedure (including conventional handover, DAPS, and primary secondary cell addition/change), the terminal device evaluates that a condition for reporting the measurement report is met, and reports the measurement report to the network side. The network side performs handover decision based on the measurement report reported by the terminal device, to determine the target cell, and requests access to the target cell from a target base station to which the target cell belongs. The target base station performs admission control, allows the terminal device to access the target cell, and allocates a radio resource (configuration information of the target cell) to the terminal device. The network side includes, in a handover command, the configuration information that is of the target cell and that is returned by the target base station, and sends the handover command to the terminal device. The terminal device accesses the target cell based on the handover command.

In a conditional handover procedure (including CHO and CPAC), the network side sends a handover command to the terminal device in advance. The handover command includes configuration information of one or more candidate cells and a trigger condition for handover execution. The terminal device determines the target cell based on whether a measurement result of the candidate cell meets the trigger condition for handover execution. After evaluating that the measurement result meets an entry threshold of a measurement event and lasts for a period of time/time to trigger (time to trigger, TTT), the terminal device determines that a trigger condition is met, where the trigger condition corresponds to the foregoing condition for reporting the measurement report or the trigger condition for handover execution of the candidate cell, and TTT represents duration in which an entry condition of the event is continuously met.

For a meaning of each measurement event, refer to Table 2.

**Table 2**

| Type | Measurement event definition | Entry condition | Exit condition |
|---|---|---|---|
| A1 | Signal quality of a serving cell becomes higher than a corresponding threshold | (Ms - Hys > Thresh) is true throughout time to trigger time | (Ms + Hys < Thresh) is true throughout time to trigger time |
| A2 | Signal quality of a serving cell becomes lower than a corresponding threshold | (Ms + Hys < Thresh) is true throughout time to trigger time | (Ms - Hys > Thresh) is true throughout time to trigger time |
| A3 | Signal quality of a neighboring cell is higher than signal quality of a serving cell by an offset | (Mn + Ofn + Ocn - Hys > Ms + Ofs + Ocs + Off) is true throughout time to trigger time | (Mn + Ofn + Ocn + Hys < Ms + Ofs + Ocs + Off) is true throughout time to trigger time |
| A4 | Signal quality of a neighboring cell becomes higher than a corresponding threshold | (Mn + Ofn + Ocn - Hys > Thresh) is true throughout time to trigger time | (Mn + Ofn + Ocn + Hys < Thresh) is true throughout time to trigger time |
| A5 | Signal quality of a serving cell becomes lower than a threshold 1 and signal quality of a neighboring cell becomes higher than a threshold 2 | (Ms + Hys < Thresh1) and (Mn + Ofn + Ocn - Hys > Thresh2) are true throughout time to trigger time | (Ms - Hys > Thresh1) or (Mn + Ofn + Ocn + Hys < Thresh2) is true throughout time to trigger time |
| A6 | Signal quality of a neighboring cell is higher than signal quality of a secondary cell by an offset | (Mn + Ocn - Hys > Ms + Ocs + Off) is true throughout time to trigger time | (Mn + Ocn + Hys < Ms + Ocs + Off) is true throughout time to trigger time |
| B1 | Signal quality of an inter-RAT neighboring cell becomes higher than a corresponding threshold | (Mn + Ofn + Ocn - Hys > Thresh) is true throughout time to trigger time | (Mn + Ofn + Ocn + Hys < Thresh) is true throughout time to trigger time |
| B2 | Signal quality of a serving cell becomes lower than a threshold 1 and signal quality of an inter-RAT neighboring cell becomes higher than a threshold 2 | (Ms + Hys < Thresh1) and (Mn + Ofn + Ocn - Hys > Thresh2) are true throughout time to trigger time | (Ms - Hys > Thresh1) or (Mn + Ofn + Ocn + Hys < Thresh2) is true throughout time to trigger time |

Ms and Mn respectively represent a measurement result of signal quality corresponding to the serving cell and a measurement result of signal quality corresponding to the neighboring cell; Hys represents an amplitude hysteresis of the measurement result; Thresh, Thresh1, and Thresh2 represent thresholds; Ofs and Ofn respectively represent a frequency offset of the serving cell and a frequency offset of the neighboring cell; Ocs and Ocn respectively represent a cell offset of the serving cell and a cell offset of the neighboring cell; and Off represents an offset of the measurement result.

The signal quality may be represented by using reference signal received power (reference signal receiving power, RSRP), a received signal strength indicator (received signal strength indication, RSSI), reference signal received quality (reference signal receiving quality, RSRQ), or a signal to interference plus noise ratio (signal to interference plus noise ratio, SINR). The RSRP may reflect reference signal received strength. The RSSI may reflect total signal strength of a current channel. The RSRQ may reflect a signal to noise ratio and an interference level of current channel quality, and is approximately a ratio of the RSRP to the RSSI. The SINR may reflect a signal to interference ratio of the current channel, and is an important indicator for measuring performance of a terminal device.

### V. Unintended events in an RRC connected state

To reduce a quantity of problems such as too early handover, delayed handover/a radio link failure in a source cell, handover to a wrong cell, unnecessary handover (unnecessary handover), and ping-pong handover (ping-pong handover) in handover such as intra-frequency handover, inter-frequency handover, or inter-RAT handover that are caused by inappropriate network parameter settings, currently, a system supports a mobility robustness optimization (mobility robustness optimization, MRO) mechanism. The MRO is an important mechanism for network self-optimization, and is for performing autonomous analysis and network parameter optimization based on a report reported by a terminal device to a network side and a report sent by a network device. Specifically, when the terminal device has a mobility unintended event (for example, the radio link failure or a handover failure), the terminal device reports a mobility-related abnormal parameter to the network device, and the network device may adjust the mobility parameter based on information reported by the terminal device. In addition, when detecting that the terminal device has a mobility unintended event (for example, the unnecessary handover or the ping-pong handover), the network device sends related information to another network device, so that the another network device determines whether to adjust a parameter and/or how to adjust a parameter, for example, a parameter for triggering the handover. The mobility unintended events include but are not limited to the following:

Too early handover: An RLF occurs shortly after handover from a source cell to a target cell succeeds, or a handover failure (handover failure, HOF) occurs in a handover process, and a terminal device attempts to re-set up a radio link connection in the source cell.

Delayed handover: An RLF occurs after a terminal device stays in a source cell for a long period of time, and the terminal device attempts to re-set up a radio link connection in a different cell.

Handover to a wrong cell: An RLF occurs shortly after handover from a source cell to a target cell succeeds, or a handover failure occurs in a handover process, and a terminal device attempts to re-set up a radio link connection in a cell other than the source cell and the target cell.

Unnecessary handover: Even if quality of service in an NR coverage area is sufficient to meet a service requirement of a terminal device, the terminal device may perform handover from an NR system to an evolved universal terrestrial radio access network (evolved universal terrestrial radio access network, E-UTRAN) system or an evolved packet system (evolved packet system, EPS). In this case, the handover may be considered as unnecessary handover (also referred to as unnecessary inter-system handover or too-early inter-system handover without a connection failure). Alternatively, quality of service in a coverage area of a source cell is sufficient to meet a service requirement of a terminal device, but the terminal device is handed over from the source cell to a target cell.

Ping-pong handover: A terminal device is handed over from a cell in a source system (for example, a 5G system) to a cell in a target system different from the source system (for example, an EPS), and then the terminal device is handed over back to the cell in the source system within predefined limited time, where quality of service in a coverage area of the source system is sufficient to meet a service requirement of the terminal device. Alternatively, the terminal device is handed over from a source cell to a target cell, and the terminal device is handed over back to the source cell within predefined limited time, where quality of service in a coverage area of the source cell is sufficient to meet a service requirement of the terminal device.

### VI. Measurement-based cell reselection mechanism

Handover is a process of a terminal device in an RRC connected state, and is initiated by a network side. Cell reselection is a process of the terminal device in an RRC idle state and an RRC inactive state, and is initiated by the terminal device. Specifically, after successfully camping on a cell, the terminal device does not perform any data service, and the terminal device is in the RRC idle state/RRC inactive state. The terminal device in the RRC idle state/RRC inactive state may measure signal quality of a serving cell and a neighboring cell. If the signal quality of the serving cell is poorer, and the signal quality of the neighboring cell is better, the terminal device actively selects a cell with a higher priority or better signal quality as a serving cell. This process is referred to as the cell reselection. An entire cell reselection procedure includes neighboring cell measurement initiation, reselection evaluation and decision, and cell reselection execution.

Neighboring cell measurement initiation: The terminal device determines, based on a measurement initiation condition, whether to start neighboring cell measurement. After determining to initiate the neighboring cell measurement, the terminal device measures signal quality of a current serving cell and a neighboring cell.

Reselection evaluation and decision: The terminal device decides whether the signal quality of the neighboring cell continuously meets a cell reselection standard during a T_{reselection} period (a continuous period of time), where the cell reselection standard includes an R/S criterion; and if the cell reselection standard is met, executes the cell reselection; or if the cell reselection standard is not met, still camps on the current serving cell.

Cell reselection execution: The terminal device executes the cell reselection, and starts to receive a system message of a new cell. If there is no access restriction, the terminal device in the RRC idle state initiates RRC connection setup, and the terminal device in the RRC inactive state initiates RRC resume to camp on the new cell.

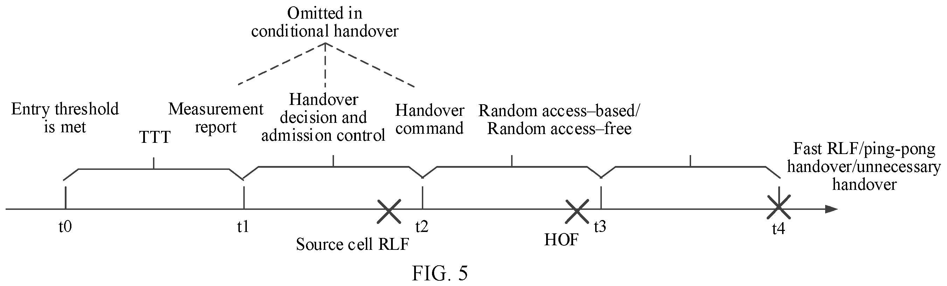

FIG. 5 is a diagram of an unintended event occurring in a measurement-based handover process. In an RRC connected state, measurement-based handover may have the following problems: (1) The handover is delayed, and service experience of a terminal device in a source cell is poor within a time period from t1 to t2, and even an RLF in the source cell is detected; (2) A target cell is determined based on a measurement result. For example, the target cell is determined based on a measurement result within a time period from t0 to t1, and the handover is executed. However, it cannot be ensured that the target cell is successfully accessed (a HOF may occur), and it cannot be ensured that an unintended event like a fast RLF, ping-pong handover, or unnecessary handover does not occur after the terminal device successfully accesses the target cell.

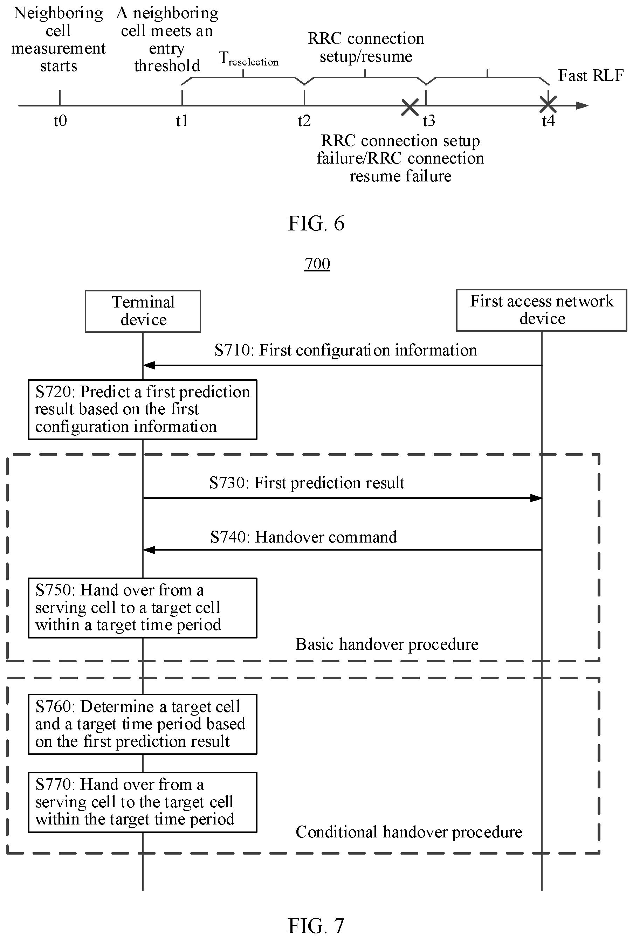

FIG. 6 is a diagram of an unintended event occurring in a measurement-based cell reselection process. In an RRC idle state/RRC inactive state, measurement-based cell reselection may have the following problem: When a terminal device performs cell reselection execution based on a measurement result within a time period from t1 to t2, it cannot be ensured that an RRC connection is set up with a cell to which reselection is performed, to enter an RRC connected state. For example, an RRC connection setup (RRC setup) failure occurs in the RRC idle state, an RRC connection resume (RRC resume) failure occurs in the RRC inactive state, or an RLF occurs shortly after the terminal device enters the RRC connected state.

Therefore, an embodiment of this application provides a communication method, so that an occurrence probability of an unintended event can be reduced in a mobility management process, thereby improving a handover success rate, user experience, and network performance.

FIG. 7 is a schematic interaction flowchart of a communication method 700 according to an embodiment of this application. A terminal device in this embodiment of this application is in an RRC connected state. A first access network device may be understood as a source base station, and a second access network device may be understood as a target base station.

S710: The first access network device sends first configuration information to the terminal device. The first configuration information includes at least one of: a predicted quantity, an initiation condition for predicting the predicted quantity, at least one time period for predicting the predicted quantity, a trigger condition for the predicted quantity, or a trigger condition for handover. The first configuration information may include one or more predicted quantities, and the predicted quantities include one of the following unintended events: an RLF in a serving cell, a HOF in at least one neighboring cell, an RLF in the at least one neighboring cell/a fast RLF in the at least one neighboring cell, ping-pong handover in the at least one neighboring cell, unnecessary handover in the at least one neighboring cell, or another custom event. Presence/occurrence of the foregoing unintended events (the occurrence of unintended events) may be used as the predicted quantity, or non-occurrence/avoidance of the foregoing unintended events (the avoidance of unintended events) may be used as the predicted quantity. Correspondingly, the terminal device receives the first configuration information from the first access network device. The serving cell may be understood as a source cell, and the neighboring cell may be understood as another cell other than the serving cell. Correspondingly, the terminal device uses these cells as potential target cells of the handover to infer a related predicted quantity.

It should be noted that the RLF in the serving cell may be understood as an RLF in the source cell when the terminal device does not perform handover. An unintended event in the neighboring cell may be understood as an unintended event that may occur, after the terminal device uses the neighboring cell as the target cell of the handover, in a process in which the terminal device is handed over to the neighboring cell or within a period of time after the terminal device is successfully handed over to the neighboring cell. The HOF in the neighboring cell may be understood as a HOF in a process in which the terminal device is handed over from the serving cell to the neighboring cell. The (fast) RLF in the neighboring cell may be understood as an RLF within a preset period of time after the terminal device is successfully handed over to the neighboring cell. The ping-pong handover in the neighboring cell may be understood as ping-pong handover within a preset period of time after the terminal device is successfully handed over to the neighboring cell. The unnecessary handover in the neighboring cell may be understood as unnecessary handover within a preset period of time after the terminal device is successfully handed over to the neighboring cell.

For example, the another custom event includes a case in which signal quality of the serving cell is less than or equal to a fifth threshold, a case in which signal quality of the neighboring cell is greater than or equal to a sixth threshold, or a case in which the signal quality of the serving cell is less than or equal to the fifth threshold and the signal quality of the neighboring cell is greater than or equal to the sixth threshold. The another custom event is not limited in this application. The fifth threshold and the sixth threshold may be configured by the first access network device for the terminal device, for example, may be configured for the terminal device by using the first configuration information, may be predefined, or may be determined by the terminal device. This is not limited herein. The signal quality in embodiments of this application may be represented by using RSRP, RSSI, RSRQ, or an SINR, or may be represented by using a result calculated according to an S criterion calculation formula/R criterion calculation formula based on RSRP, RSSI, RSRQ, or an SINR obtained by the terminal device through measurement.

For example, the neighboring cell may be all or a part of a neighboring cell measured by the terminal device, or may be all or a part of a neighboring cell that meets the trigger condition for the predicted quantity, or may be at least one cell indicated by the first configuration information, or may be a cell determined by the terminal device based on a quantity of cells or neighboring cells indicated by the first configuration information.

Optionally, the initiation condition for predicting the predicted quantity includes: event-triggered one-time prediction, event-triggered periodical prediction, or non-event-triggered periodical prediction. Such an event may be an event corresponding to an event type in the foregoing event types A1 to A6 and event types B1 and B2, or may be an event that merely meets the entry condition for the foregoing event type without continuously meeting the entry condition for a period of time (time to trigger), for example, an event of which signal quality meets a threshold condition but does not need to continuously meet the threshold condition for a period of time. The event may alternatively be that a priority of the neighboring cell is higher than a priority of the serving cell, where the priority may be a priority of a measurement object, a priority of a frequency, or a priority of a cell. The event may alternatively be another event. This is not limited in this application, and is specifically indicated by a network side (the first access network device) to the terminal device.

(1) Event-triggered (event triggered) one-time prediction: A corresponding prediction type (prediction type) is "event", and "prediction type" = "event triggered"; a prediction amount (prediction amount) is one time, and "prediction amount" = 1; and regardless of a value of a reporting interval (prediction interval), the terminal device ignores the interval. For example, if signal quality of the serving cell or the neighboring cell meets an entry threshold of an event, or the priority of the neighboring cell is higher than the priority of the serving cell, the terminal device is triggered to perform one-time prediction.

(2) Event-triggered periodical prediction: A corresponding prediction type is "event", and "prediction type" = "event triggered"; a prediction amount is multiple times, and "prediction amount" > 1; and a reporting interval is as follows: "prediction interval" is set as required. For example, if signal quality of the serving cell or the neighboring cell meets an entry threshold of an event, or the priority of the neighboring cell is higher than the priority of the serving cell, the terminal device is triggered to periodically perform multiple-time prediction. Specifically, after the prediction is triggered, the terminal device may initiate timers respectively corresponding to the multiple-time prediction and a counter for the prediction amount, and a prediction procedure ends only when the prediction amount reaches an upper limit. If the prediction amount is set to infinite, the terminal device continuously periodically performs prediction.

(3) Non-event-triggered periodical prediction: A corresponding prediction type is periodical, and "prediction type" = "periodical"; a prediction amount is multiple times, and "prediction amount" > 1; and a reporting interval is as follows: "prediction interval" is set as required. The terminal device performs prediction based on the specified prediction interval (period).

Optionally, the first access network device may indicate, based on a time interval of time periods and a quantity of the time periods that are indicated by using the first configuration information, the at least one time period for predicting the predicted quantity to the terminal device; or the first access network device may indicate, based on a time period list indicated by using the first configuration information, the at least one time period for predicting the predicted quantity to the terminal device, where start and end points of each time period may be indicated in the time period list; or the first access network device may indicate, based on a range of time periods and a granularity of a time interval of the time periods that are indicated by using the first configuration information, the at least one time period for predicting the predicted quantity to the terminal device. It should be noted that, in a case in which the time periods are divided based on the range of the time periods and the granularity of the time interval of the time periods, if duration of a tail time period (a last time period) obtained by division is less than the time interval, flexible processing may be performed according to an implementation. Prediction may not be performed in the tail time period, or prediction may be performed in the tail time period. The at least one time period for predicting the predicted quantity may also be replaced with an earliest or latest time point/time period for predicting that the unintended event occurs, or may be replaced with an earliest or latest time point/time period for predicting that the unintended event does not occur. The earliest time point may be a start point of the earliest time period, and the latest time point may be an end point of the latest time period.

For example, when performing single-time prediction, the terminal device may predict, within one or more time periods, the RLF in the serving cell, the HOF in the at least one neighboring cell, the RLF in the at least one neighboring cell, the ping-pong handover in the at least one neighboring cell, the unnecessary handover in the at least one neighboring cell, or the another custom event in the serving cell and/or the neighboring cell.

Optionally, the trigger condition for the predicted quantity includes: the unintended event does not occur, or an occurrence probability of the unintended event is less than or equal to a first threshold, or a non-occurrence probability of the unintended event is greater than or equal to a second threshold. The first threshold and the second threshold may be configured by the first access network device for the terminal device, may be predefined, or may be determined by the terminal device. This is not limited herein.

For example, the predicted quantity is ping-pong handover in a neighboring cell 1, the first threshold is 30%, and the second threshold is 70%. If it is predicted that a ping-pong event does not occur in the neighboring cell 1 within a time period 1, or an occurrence probability of a ping-pong event in the neighboring cell 1 within a time period 1 is less than or equal to 30%, or a non-occurrence probability of a ping-pong event in the neighboring cell 1 within a time period 1 is greater than or equal to 70%, a trigger condition for the predicted quantity is met. The foregoing at least one neighboring cell includes the neighboring cell 1, and the foregoing at least one time period includes the time period 1.

Optionally, the trigger condition for the handover includes: that one or more predicted quantities correspondingly meet a combination of respective trigger conditions of the predicted quantities/one or more predicted quantities meet a combination of trigger conditions of the predicted quantities; or that a weighted sum of occurrence probabilities that respectively correspond to a plurality of predicted quantities is less than or equal to a third threshold; or that a weighted sum of non-occurrence probabilities that respectively correspond to a plurality of predicted quantities is greater than or equal to a fourth threshold. The third threshold and the fourth threshold may be configured by the first access network device for the terminal device, may be predefined, or may be determined by the terminal device. This is not limited.

For example, if a predicted quantity meets a trigger condition for the predicted quantity, it is considered that a trigger condition for handover is met. For example, the predicted quantity is a HOF in a neighboring cell 1. If it is predicted that the HOF does not occur in the neighboring cell 1 within a time period 1, it is considered that the trigger condition for the handover is met in the neighboring cell 1 within the time period 1.

For example, if a plurality of predicted quantities respectively meet trigger conditions for the predicted quantities, it is considered that a trigger condition for handover is met. For example, the plurality of predicted quantities are the RLF in the serving cell and a HOF in a neighboring cell 1. If it is predicted that the RLF does not occur in the serving cell within a time period 1, and the HOF does not occur in the neighboring cell 1 within the time period 1, it is considered that the trigger condition for the handover is met in the neighboring cell 1 within the time period 1. For another example, the predicted quantities include the RLF in the serving cell and a fast RLF in a neighboring cell 1. If it is predicted that the RLF does not occur in the serving cell within a time period 1, and the fast RLF does not occur in the neighboring cell 1 within the time period 1, it is considered that the trigger condition for the handover is met in the neighboring cell 1 within the time period 1.

For example, if the weighted sum of the occurrence probabilities that respectively correspond to the plurality of predicted quantities is less than or equal to the third threshold, it is considered that the trigger condition for the handover is met, where the weighted sum is obtained by multiplying the occurrence probabilities by weight coefficients and then performing summation. For example, the plurality of predicted quantities are the RLF in the serving cell, a HOF in a neighboring cell 1, a fast RLF in the neighboring cell 1, and ping-pong handover in the neighboring cell 1. If it is predicted that, within a time period 1, a sum of an occurrence probability of the RLF in the serving cell * w₁, an occurrence probability of the HOF in the neighboring cell 1 * w₂, an occurrence probability of the fast RLF in the neighboring cell 1 * w₃, and an occurrence probability of the ping-pong handover in the neighboring cell 1 * w₄ is less than or equal to the third threshold, it is considered that the trigger condition for the handover is met in the neighboring cell 1 within the time period 1. A weight coefficient may be a percentage value or a numeric value, and is not limited.

For example, if the weighted sum of the non-occurrence probabilities that respectively correspond to the plurality of predicted quantities is greater than or equal to the fourth threshold, it is considered that the trigger condition for the handover is met. For example, the plurality of predicted quantities are the RLF in the serving cell, a HOF in a neighboring cell 1, a fast RLF in the neighboring cell 1, and ping-pong handover in the neighboring cell 1. If it is predicted that, within a time period 1, a non-occurrence probability of the RLF in the serving cell * w₅ + a non-occurrence probability of the HOF in the neighboring cell 1 * w₆ + a non-occurrence probability of the fast RLF in the neighboring cell 1 * w₇ + a non-occurrence probability of the ping-pong handover in the neighboring cell 1 * w₈ is greater than or equal to the fourth threshold, it is considered that the trigger condition for the handover is met in the neighboring cell 1 within the time period 1. A weight coefficient may be a percentage value or a numeric value, and is not limited.

Optionally, the first configuration information may be sent by the first access network device to the terminal device by using a dedicated RRC message, for example, an RRC reconfiguration message or an RRC resume message; or the first configuration information may alternatively be sent or indicated by the first access network device to the terminal device by using a common RRC message. For example, the first configuration information may be sent by the first access network device to the terminal device by using a system information block (system information block, SIB) message.

S720: The terminal device predicts a first prediction result based on the first configuration information. Specifically, in a case in which the first configuration information includes the initiation condition for predicting the predicted quantity, when the initiation condition for predicting the predicted quantity is met, the terminal device predicts the first prediction result; or in a case in which the first configuration information does not include the initiation condition for predicting the predicted quantity, the terminal device may directly predict the first prediction result based on the first configuration information.

For example, the terminal device predicts the first prediction result based on the first configuration information and input information. The input information includes one or more of a historical first prediction result, historical position information of the terminal device, historical speed information of the terminal device, historical moving path information of the terminal device, or historical primary neighboring cell ephemeris information. Information specifically included in the input information may be configured by a network side (the first access network device) for the terminal device, may be predefined, or may be determined by the terminal device. This is not limited in this application. For example, the terminal device obtains the first prediction result through prediction based on the first configuration information and the input information through AI/ML inference.

Optionally, the first prediction result includes at least one of the following: whether the unintended event occurs, an occurrence probability of the unintended event, or a non-occurrence probability of the unintended event within the at least one time period in the serving cell and/or the at least one neighboring cell, where the first prediction result may include at least one of an identifier of the serving cell and/or the at least one neighboring cell, indication information indicating whether at least one unintended event corresponding to the cell occurs, and an occurrence probability/a non-occurrence probability of at least one unintended event corresponding to the cell; an identifier of at least one first candidate cell that meets the trigger condition for the predicted quantity, and at least one time period in which the trigger condition for the predicted quantity is met and that respectively corresponds to the at least one first candidate cell; or an identifier of at least one second candidate cell that meets the trigger condition for the handover, and at least one time period in which the trigger condition for the handover is met and that respectively corresponds to the at least one second candidate cell, where the serving cell and the at least one neighboring cell include the at least one first candidate cell. Optionally, the time period included in the first prediction result may also be replaced with an earliest or latest time period/time point in/at which the unintended event occurs/does not occur.

It should be understood that there may be three manners of predicting "whether" in this application. One manner is predicting "yes", and another manner is predicting "no". For example, the terminal device predicts whether the unintended event occurs. One that the terminal device predicts that the unintended event occurs, where true indicates that the unintended event occurs, and false indicates that the unintended event does not occur. The other is that the terminal device predicts that the unintended event does not occur, where true indicates that the unintended event does not occur, and false indicates that the unintended event occurs. For other content of predicting "whether" in this specification, refer to the explanation herein.

For example, the first configuration information includes the predicted quantity, the initiation condition for predicting the predicted quantity, and the at least one time period for predicting the predicted quantity. The first prediction result includes at least one of the following: whether the unintended event occurs, or the occurrence probability of the unintended event, or the non-occurrence probability of the unintended event within the at least one time period in the serving cell and/or the at least one neighboring cell.

For example, the first configuration information includes the predicted quantity, the initiation condition for predicting the predicted quantity, the at least one time period for predicting the predicted quantity, and the trigger condition for the predicted quantity. The first prediction result includes at least one of the following: the identifier of the at least one first candidate cell that meets the trigger condition for the predicted quantity, the time period in which the trigger condition for the predicted quantity is met and that respectively corresponds to each of the at least one first candidate cell, or an occurrence probability/a non-occurrence probability that is of an unintended event, that is indicated by the predicted quantity and that is within at least one time period in which the trigger condition for the predicted quantity is met and that is of the serving cell and/or the at least one first candidate cell.

For example, the first configuration information includes the predicted quantity, the initiation condition for predicting the predicted quantity, the at least one time period for predicting the predicted quantity, the trigger condition for the predicted quantity, and the trigger condition for the handover. The first prediction result includes at least one of the following: whether the unintended event occurs, or the occurrence probability of the unintended event, or the non-occurrence probability of the unintended event within the at least one time period in the serving cell and/or the at least one neighboring cell, the identifier of the at least one first candidate cell that meets the trigger condition for the predicted quantity, and the time period in which the trigger condition for the predicted quantity is met and that respectively corresponds to each of the at least one first candidate cell.

For example, the first configuration information includes the predicted quantity, the initiation condition for predicting the predicted quantity, the at least one time period for predicting the predicted quantity, the trigger condition for the predicted quantity, and the trigger condition for the handover. The first prediction result includes at least one of the following: the identifier of the at least one second candidate cell that meets the trigger condition for the handover, the time period in which the trigger condition for the handover is met and that respectively corresponds to each of the at least one second candidate cell.

In the technical solution provided in this embodiment of this application, the terminal device can predict the first prediction result (whether the unintended event occurs, or an occurrence probability of the unintended event, or a non-occurrence probability of the unintended event within at least one future time period; or the identifier of the at least one first candidate cell that meets the trigger condition for the predicted quantity, and the time period in which the trigger condition for the predicted quantity is met and that respectively corresponds to each of the at least one first candidate cell; or the identifier of the at least one second candidate cell that meets the trigger condition for the handover, and the time period in which the trigger condition for the handover is met and that respectively corresponds to each of the at least one second candidate cell) based on the first configuration information from the first access network device; and the target cell of the handover can be determined based on the first prediction result, so that the occurrence probability of the unintended event can be reduced in a mobility management process, thereby improving a handover success rate, user experience, and network performance.

Optionally, after S720, in a basic handover procedure, the terminal device needs to report the first prediction result to the first access network device, and the first access network device sends a handover command to the terminal device based on the first prediction result. The handover command indicates to perform handover to the target cell within a target time period, and the terminal device is handed over from the serving cell to the target cell within the target time period based on the handover command. The following provides an example for description with reference to S730 to S750.

S730: The terminal device sends the first prediction result to the first access network device, and correspondingly, the first access network device receives the first prediction result from the terminal device.

S740: The first access network device sends the handover command to the terminal device based on the first prediction result, where the handover command includes indication information that indicates to perform handover to the target cell within the target time period. The target cell in the handover command may be one of the at least one neighboring cell included in the first prediction result, and the target time period in the handover command may be one of the at least one time period included in the first prediction result. Correspondingly, the terminal device receives the handover command from the first access network device. For example, the handover command may indicate the terminal device to access the target cell within the target time period. Similarly, the target time period may be a target time point, and further, may be an earliest target time point or a latest target time point.

Optionally, the first access network device determines, based on the first prediction result, that a current serving cell of the terminal device may continue to be used as a serving cell, and is not changed by the terminal device.

Optionally, the first access network device sends a handover request message to a second access network device based on the first prediction result, where the handover request message includes a part or all of the first prediction result. Correspondingly, the second access network device receives the handover request message from the first access network device. The second access network device performs access admission control based on a part or all of the first prediction result, to determine a resource that is of the target cell and that is allocated to the terminal device, and sends a handover request acknowledgment message to the first access network device, where the handover request acknowledgment message may include parameter information required to indicate to perform handover to the target cell within the target time period. Correspondingly, the first access network device receives the handover request acknowledgment message from the second access network device. The first access network device sends the handover command to the terminal device based on the handover request acknowledgment message, where the handover command includes indication information that indicates to perform handover to the target cell within the target time period. Correspondingly, the terminal device receives the handover command from the first access network device.

For example, the first prediction result sent by the terminal device to the first access network device may include at least one of an identifier of at least one second candidate cell that meets the trigger condition for the handover, a time period in which the trigger condition for the handover is met and that respectively corresponds to each of the at least one second candidate cell, or an occurrence probability/a non-occurrence probability that is of the unintended event, that is indicated by the predicted quantity, and that is within at least one time period in which the trigger condition for the handover is met and that is of the serving cell and/or the at least one second candidate cell. After receiving the first prediction result, the first access network device sends a handover request message to the second access network device, where the handover request message includes one or more of the following: a predicted identifier of the at least one second candidate cell, at least one predicted time period corresponding to the at least one second candidate cell, or an occurrence probability/a non-occurrence probability of at least one unintended event in the serving cell and/or the at least one second candidate cell within the time period. The second access network device determines, based on the handover request message, a target cell that the terminal device is allowed to access from the at least one second candidate cell and a target time period for accessing the target cell. The second access network device sends a handover request acknowledgment message to the first access network device, where the handover request acknowledgment message includes parameter information required to indicate to perform handover to the target cell within the target time period. Correspondingly, the first access network device receives the handover request acknowledgment message from the second access network device. The first access network device sends the handover command to the terminal device based on the handover request acknowledgment message, where the handover command includes indication information that indicates to perform handover to the target cell within the target time period. Correspondingly, the terminal device receives the handover command from the first access network device. In this example, the first configuration information includes the predicted quantity, the initiation condition for predicting the predicted quantity, the at least one time period for predicting the predicted quantity, the trigger condition for the predicted quantity, and the trigger condition for the handover.

Optionally, the first prediction result sent by the terminal device to the first access network device may include whether the unintended event occurs, or the occurrence probability of the unintended event, or the non-occurrence probability of the unintended event within the at least one time period in the serving cell and/or the at least one neighboring cell. Based on the received first prediction result, the first access network device further determines, based on the trigger condition for the predicted quantity, the identifier of the at least one first candidate cell that meets the trigger condition for the predicted quantity, and the time period in which the trigger condition for the predicted quantity is met and that respectively corresponds to each of the at least one first candidate cell; or the first access network device determines, based on the first prediction result and the trigger condition for the handover, the identifier of the at least one second candidate cell that meets the trigger condition for the handover, and the time period in which the trigger condition for the handover is met and that respectively corresponds to each of the at least one second candidate cell. The first access network device sends a handover request message to a second access network device, where the handover request message may include at least one of the following: the identifier of the at least one second candidate cell that meets the trigger condition for the handover, and the time period in which the trigger condition for the handover is met and that respectively corresponds to each of the at least one second candidate cell, or an occurrence probability/a non-occurrence probability of at least one unintended event in the at least one second candidate cell within the foregoing time period. The second access network device determines, based on the handover request message, a target cell that the terminal device is allowed to access from the at least one second candidate cell and a target time period for accessing the target cell, where a time period in which the trigger condition for the handover is met and that corresponds to the target cell includes the target time period. The second access network device sends a handover request acknowledgment message to the first access network device, where the handover request acknowledgment message includes parameter information required to indicate to perform handover to the target cell within the target time period. Correspondingly, the first access network device receives the handover request acknowledgment message from the second access network device. The first access network device sends the handover command to the terminal device based on the handover request acknowledgment message, where the handover command includes indication information that indicates to perform handover to the target cell within the target time period. Correspondingly, the terminal device receives the handover command from the first access network device. In this example, the first configuration information includes the predicted quantity, the initiation condition for predicting the predicted quantity, and the at least one time period for predicting the predicted quantity.

Optionally, the first prediction result sent by the terminal device to the first access network device may include the identifier of the at least one first candidate cell that meets the trigger condition for the predicted quantity, the time period in which the trigger condition for the predicted quantity is met and that respectively corresponds to each of the at least one first candidate cell, and an occurrence probability/a non-occurrence probability of at least one unintended event in the at least one first candidate cell within the foregoing time period. Based on the received first prediction result, the first access network device further determines, based on the trigger condition for the handover, an identifier of at least one second candidate cell that meets the trigger condition for the handover, and a time period in which the trigger condition for the handover is met and that respectively corresponds to each of the at least one second candidate cell. The first access network device sends a handover request message to a second access network device, where the handover request message includes at least one of the identifier of the at least one second candidate cell that meets the trigger condition for the handover, and the time period in which the trigger condition for the handover is met and that respectively corresponds to each of the at least one second candidate cell, or an occurrence probability/a non-occurrence probability of at least one unintended event in the at least one second candidate cell within the foregoing time period. The second access network device determines, based on the handover request message, a target cell that the terminal device is allowed to access from the at least one second candidate cell and a target time period for accessing the target cell, where a time period in which the trigger condition for the handover is met and that corresponds to the target cell includes the target time period. The second access network device sends a handover request acknowledgment message to the first access network device, where the handover request acknowledgment message includes parameter information required to indicate to perform handover to the target cell within the target time period. Correspondingly, the first access network device receives the handover request acknowledgment message from the second access network device. The first access network device sends the handover command to the terminal device based on the handover request acknowledgment message, where the handover command indicates to perform handover to the target cell within the target time period. Correspondingly, the terminal device receives the handover command from the first access network device. In this example, the first configuration information includes the predicted quantity, the initiation condition for predicting the predicted quantity, the at least one time period for predicting the predicted quantity, and the trigger condition for the predicted quantity.

Optionally, the first prediction result received by the first access network device may include at least one of the following: the identifier of the at least one first candidate cell that meets the trigger condition for the predicted quantity; the time period in which the trigger condition for the predicted quantity is met and that respectively corresponds to each of the at least one first candidate cell; an occurrence probability/a non-occurrence probability of at least one unintended event in the at least one first candidate cell within the corresponding time period; the identifier of the at least one second candidate cell that meets the trigger condition for the handover; the time period in which the trigger condition for the handover is met and that respectively corresponds to each of the at least one second candidate cell; an occurrence probability/a non-occurrence probability of at least one unintended event in the at least one second candidate cell within the corresponding time period; and whether the unintended event occurs, or the occurrence probability of the unintended event, or the non-occurrence probability of the unintended event within the at least one time period in the serving cell and/or the at least one neighboring cell. This is not specifically limited in this application.

S750: The terminal device is handed over from the serving cell to the target cell within the target time period based on the handover command.

Optionally, the handover command may indicate to perform handover to the target cell within the target time period, or may only indicate to perform handover to the target cell.

For example, the second access network device sends the handover request acknowledgment message to the first access network device, where the handover request acknowledgment message includes information required to indicate access to the target cell. Correspondingly, the first access network device receives the handover request acknowledgment message from the second access network device. The target time period obtained by the first access network device may be a target time period that is indicated by the second access network device and that is obtained from the handover request acknowledgment message, or may be a target time period determined by the first access network device. In an implementation, the first access network device sends the handover command to the terminal device within a time period close to the target time period, where the handover command indicates to perform handover to the target cell. Correspondingly, the terminal device receives the handover command from the first access network device, and is handed over from the serving cell to the target cell. In another implementation, the first access network device indicates, in the handover command, to perform handover to the target cell within the target time period. Correspondingly, the terminal device receives the handover command from the first access network device, and is handed over from the serving cell to the target cell within the indicated target time period.

Optionally, after S720, in a conditional handover procedure, the terminal device may determine, based on the first prediction result, the target cell for handover and the target time period corresponding to the target cell, and perform handover to the target cell within the target time period. The following provides example description with reference to S760 and S770.

S760: Based on the first prediction result, the terminal device determines a target cell that meets the trigger condition for the predicted quantity and a target time period in which the trigger condition for the predicted quantity is met and that corresponds to the target cell; or determines a target cell that meets the trigger condition for the handover and a target time period in which the trigger condition for the handover is met and that corresponds to the target cell.

S770: The terminal device is handed over from the serving cell to the target cell within the target time period.

Optionally, if the target cell determined by the terminal device is the serving cell, the terminal device continues to stay in the serving cell within the target time period, and does not perform the handover.

For example, the first prediction result, predicted by the terminal device based on at least one of the predicted quantity, the initiation condition for predicting the predicted quantity, the at least one time period for predicting the predicted quantity, the trigger condition for the predicted quantity, and the trigger condition for the handover that are included in the first configuration information, includes whether the unintended event occurs, or the occurrence probability of the unintended event, or the non-occurrence probability of the unintended event within the at least one time period in the serving cell and/or the at least one neighboring cell. The terminal device determines, based on the first prediction result and the trigger condition for the predicted quantity, the target cell that meets the trigger condition for the predicted quantity and the target time period in which the trigger condition for the predicted quantity is met and that corresponds to the target cell. The terminal device is handed over from the serving cell to the target cell within the target time period.

For example, the first prediction result, predicted by the terminal device based on the predicted quantity, the initiation condition for predicting the predicted quantity, the at least one time period for predicting the predicted quantity, and the trigger condition for the predicted quantity that are included in the first configuration information, includes the identifier of the at least one first candidate cell that meets the trigger condition for the predicted quantity, and the time period in which the trigger condition for the predicted quantity is met and that respectively corresponds to each of the at least one first candidate cell. The terminal device determines, based on the first prediction result, the target cell from the at least one first candidate cell and the target time period in which the trigger condition for the predicted quantity is met and that corresponds to the target cell. The terminal device is handed over from the serving cell to the target cell within the target time period.

For example, the first prediction result, predicted by the terminal device based on the predicted quantity, the initiation condition for predicting the predicted quantity, the at least one time period for predicting the predicted quantity, the trigger condition for the predicted quantity, and the trigger condition for the handover that are included in the first configuration information, includes the identifier of the at least one second candidate cell that meets the trigger condition for the handover, and the time period in which the trigger condition for the handover is met and that respectively corresponds to each of the at least one second candidate cell. The terminal device determines, based on the first prediction result, the target cell from the at least one second candidate cell and the target time period in which the trigger condition for the handover is met and that corresponds to the target cell. The terminal device is handed over from the serving cell to the target cell within the target time period.

In this embodiment of this application, the unintended event is used as an example of the predicted quantity. Optionally, the predicted quantity may alternatively be that the unintended event does not occur, for example, an RLF does not occur in a serving cell, handover succeeds in a neighboring cell, the RLF does not occur in the neighboring cell, ping-pong handover does not occur in the neighboring cell, unnecessary handover does not occur in the neighboring cell, or another custom event does not occur. This is not limited in this application.

An embodiment of this application provides another communication method, so that an occurrence probability of an unintended event can be reduced in a mobility management process, thereby improving an RRC connection setup success rate/an RRC connection resume success rate, user experience, and network performance.

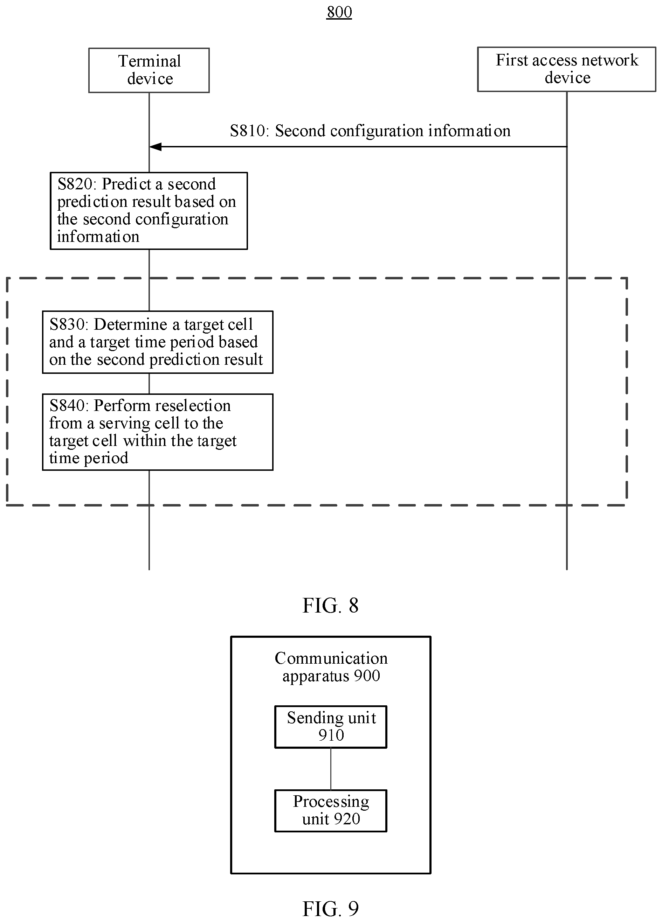

FIG. 8 is a schematic interaction flowchart of another communication method 800 according to an embodiment of this application. A terminal device in this embodiment of this application is in an RRC idle state or an RRC inactive state.

S810: A first access network device sends second configuration information to a terminal device, where the second configuration information includes at least one of: a predicted quantity, an initiation condition for predicting the predicted quantity, at least one time period for predicting the predicted quantity, a trigger condition for the predicted quantity, or a trigger condition for cell reselection, and the predicted quantity includes one of the following unintended events: an RRC connection setup failure in a serving cell, an RRC connection resume failure in the serving cell, an RLF after RRC connection setup in the serving cell/a fast RLF after RRC connection setup in the serving cell, an RRC connection setup failure in at least one neighboring cell, an RRC connection resume failure in the at least one neighboring cell, an RLF after RRC connection setup in the at least one neighboring cell/a fast RLF after RRC connection setup in the at least one neighboring cell, or another custom event. Correspondingly, the terminal device receives the second configuration information from the first access network device.

It should be noted that, the RRC connection setup failure in the serving cell (the neighboring cell) may be understood as that after sending an RRC connection setup request to the serving cell (the neighboring cell), the terminal device in the RRC idle state does not receive a response message from the serving cell (the neighboring cell) within a period of time, where the response message includes a radio link control setup (RRC setup) message or a radio link control reject (RRC reject) message sent by a network side. In other words, the RRC connection setup failure in the serving cell (the neighboring cell) may be understood as that the terminal device in the RRC idle state fails to initiate the RRC connection setup to the serving cell (the neighboring cell).

The RRC connection resume failure in the serving cell (the neighboring cell) may be understood as that after sending an RRC connection resume request to the serving cell (the neighboring cell), the terminal device in the RRC inactive state does not receive a response message from the serving cell (the neighboring cell) within a period of time, where the response message includes a radio link control resume (RRC resume) message, the RRC setup message, or a radio link control release (RRC release) message sent by the network side. In other words, the RRC connection resume failure in the serving cell (the neighboring cell) may be understood as that the terminal device in the RRC inactive state fails to initiate the RRC connection resume to the serving cell (the neighboring cell).

The RLF after the RRC connection setup in the serving cell (the neighboring cell) may be understood as an RLF in the serving cell (the neighboring cell) within a preset period of time after the terminal device in the RRC idle state initiates an RRC connection setup procedure to the serving cell (the neighboring cell) or the terminal device in the RRC inactive state initiates an RRC connection resume procedure to the serving cell (the neighboring cell) and enters an RRC connected state.

For example, the another custom event includes a case in which signal quality of the serving cell is less than or equal to a fifth threshold, a case in which signal quality of the neighboring cell is greater than or equal to a sixth threshold, or a case in which signal quality of the serving cell is less than or equal to a fifth threshold and signal quality of the neighboring cell is greater than or equal to a sixth threshold. The another custom event is not limited in this application. The fifth threshold and the sixth threshold may be configured by the first access network device for the terminal device, may be predefined, or may be determined by the terminal device. This is not limited herein. The signal quality in embodiments of this application may be represented by using RSRP, RSSI, RSRQ, or an SINR, or may be represented by using a result calculated according to an S criterion calculation formula/R criterion calculation formula based on RSRP, RSSI, RSRQ, or an SINR obtained by the terminal device through measurement.

For example, the neighboring cell may be all or a part of a neighboring cell measured by the terminal device, or may be all or a part of a neighboring cell that meets the trigger condition for the predicted quantity.

Optionally, the initiation condition for predicting the predicted quantity includes: event-triggered one-time prediction, event-triggered periodical prediction, or non-event-triggered periodical prediction. Such an event may be an event corresponding to an event type in the foregoing event types A1 to A6 and event types B1 and B2, or may be an event that merely meets the entry condition for the foregoing event type without continuously meeting the entry condition for a period of time (time to trigger), for example, an event of which signal quality meets a threshold condition but does not need to continuously meet the threshold condition for a period of time. The event may alternatively be that a priority of the neighboring cell is higher than a priority of the serving cell, where the priority may be a priority of a measurement object, a priority of a frequency, or a priority of a cell. The event may alternatively be another event. This is not limited in this application, and is specifically indicated by a network side (the first access network device) to the terminal device.
(1) Event-triggered one-time prediction: A corresponding prediction type (prediction type) is "event", and "prediction type" = "event triggered"; a prediction amount (prediction amount) is one time, and "prediction amount" = 1; and regardless of a value of a reporting interval (prediction interval), the terminal device ignores the interval. For example, if signal quality of the serving cell or the neighboring cell meets an entry threshold of an event, or the priority of the neighboring cell is higher than the priority of the serving cell, the terminal device is triggered to perform one-time prediction.
(2) Event-triggered periodical prediction: A corresponding prediction type is "event", and "prediction type" = "event triggered"; a prediction amount is multiple times, and "prediction amount" > 1; and a reporting interval is as follows: "prediction interval" is set as required. For example, if signal quality of the serving cell or the neighboring cell meets an entry threshold of an event, or the priority of the neighboring cell is higher than the priority of the serving cell, the terminal device is triggered to periodically perform multiple-time prediction. Specifically, after the prediction is triggered, the terminal device may initiate timers respectively corresponding to the multiple-time prediction and a counter for the prediction amount, and a prediction procedure ends only when the prediction amount reaches an upper limit. If the prediction amount is set to infinite, the terminal device continuously periodically performs prediction.
(3) Non-event-triggered periodical prediction: A corresponding prediction type is periodical, and "prediction type" = "periodical"; a prediction amount is multiple times, and "prediction amount" > 1; and a reporting interval is as follows: "prediction interval" is set as required. The terminal device performs prediction based on the specified prediction interval (period).

Optionally, the first access network device may indicate, based on a time interval of time periods and a quantity of the time periods that are indicated by using the second configuration information, the at least one time period for predicting the predicted quantity to the terminal device; or the first access network device may indicate, based on a time period list indicated by using the second configuration information, the at least one time period for predicting the predicted quantity to the terminal device, where start and end points of each time period may be indicated in the time period list; or the first access network device may indicate, based on a range of time periods and a granularity of a time interval of the time periods that are indicated by using the second configuration information, the at least one time period for predicting the predicted quantity to the terminal device. It should be noted that, in a case in which the time periods are divided based on the range of the time periods and the granularity of the time interval of the time periods, if duration of a tail time period (a last time period) obtained by division is less than the time interval, flexible processing may be performed according to an implementation. Prediction may not be performed in the tail time period, or prediction may be performed in the tail time period. The at least one time period for predicting the predicted quantity may also be replaced with an earliest or latest time point/time period for predicting that the unintended event occurs, or may be replaced with an earliest or latest time point/time period for predicting that the unintended event does not occur. The earliest time point may be a start point of the earliest time period, and the latest time point may be an end point of the latest time period.

For example, when performing single-time prediction, the terminal device may predict, within one or more time periods, the RRC connection setup failure in the serving cell, the RLF after the RRC connection setup in the serving cell, the RRC connection setup failure in the at least one neighboring cell, and the RLF after the RRC connection setup in the at least one neighboring cell. For example, when performing single-time prediction, the terminal device may predict, within one or more time periods, the RRC connection resume failure in the serving cell, the RLF after the RRC connection setup in the serving cell, the RRC connection resume failure in the at least one neighboring cell, the RLF after the RRC connection setup in the at least one neighboring cell, or the another custom event in the serving cell and/or the neighboring cell.

Optionally, the trigger condition for the predicted quantity includes: the unintended event does not occur, or an occurrence probability of the unintended event is less than or equal to a first threshold, or a non-occurrence probability of the unintended event is greater than or equal to a second threshold. The first threshold and the second threshold may be configured by the first access network device for the terminal device, may be predefined, or may be determined by the terminal device. This is not limited herein.

For example, the predicted quantity is an RRC connection setup failure in a neighboring cell 1, the first threshold is 30%, and the second threshold is 70%. If it is predicted that the RRC connection setup failure does not occur in the neighboring cell 1 within a time period 1, or an occurrence probability of the RRC connection setup failure in the neighboring cell 1 within a time period 1 is less than or equal to 30%, or a non-occurrence probability of the RRC connection setup failure in the neighboring cell 1 within a time period 1 is greater than or equal to 70%, a trigger condition for the predicted quantity is met. The foregoing at least one neighboring cell includes the neighboring cell 1, and the foregoing at least one time period includes the time period 1.

Optionally, the trigger condition for the cell reselection includes: that one or more predicted quantities correspondingly meet a combination of respective trigger conditions of the predicted quantities/one or more predicted quantities meet a combination of trigger conditions of the predicted quantities; or that a weighted sum of occurrence probabilities that respectively correspond to a plurality of predicted quantities is less than or equal to a third threshold; or that a weighted sum of non-occurrence probabilities that respectively correspond to a plurality of predicted quantities is greater than or equal to a fourth threshold; or that a weighted sum of occurrence probabilities or non-occurrence probabilities that respectively correspond to a plurality of predicted quantities is considered during calculation according to a cell reselection R criterion/S criterion.

For example, if a predicted quantity meets a trigger condition for the predicted quantity, it is considered that a trigger condition for cell reselection is met. For example, the predicted quantity is an RRC connection setup failure in a neighboring cell 1. If it is predicted that the RRC connection setup failure does not occur in the neighboring cell 1 within a time period 1, it is considered that the trigger condition for the cell reselection is met in the neighboring cell 1 within the time period 1.

For example, if a plurality of predicted quantities respectively meet trigger conditions for the predicted quantities, it is considered that a trigger condition for cell reselection is met. For example, the plurality of predicted quantities are respectively an RRC connection setup failure in a neighboring cell 1 and an RLF after RRC connection setup in the neighboring cell 1. If it is predicted that the RRC connection setup failure does not occur in the neighboring cell 1 within a time period 1, and the RLF after the RRC connection setup in the neighboring cell 1 does not occur in the neighboring cell 1 within the time period 1, it is considered that the trigger condition for the cell reselection is met in the neighboring cell 1 within the time period 1. For another example, the predicted quantity includes an RRC connection resume failure in a neighboring cell 1 and an RLF after RRC connection setup in the neighboring cell 1. If it is predicted that the RRC connection resume failure does not occur in the neighboring cell 1 within a time period 1, and the RLF after the RRC connection setup in the neighboring cell 1 does not occur in the neighboring cell 1 within the time period 1, it is considered that the trigger condition for the cell reselection is met in the neighboring cell 1 within the time period 1.

For example, if the sum of the occurrence probabilities that respectively correspond to the plurality of predicted quantities is less than or equal to the third threshold, it is considered that the trigger condition for the cell reselection is met, where the weighted sum is obtained by multiplying the occurrence probabilities by weight coefficients and then performing summation. For example, the plurality of predicted quantities are respectively an RRC connection setup failure in a neighboring cell 1 and an RLF after RRC connection setup in the neighboring cell 1. If it is predicted that, within a time period 1, a sum of an occurrence probability of the RRC connection setup failure in the neighboring cell 1 * w₁ and an occurrence probability of the RLF after the RRC connection setup in the neighboring cell 1 * w₂ is less than or equal to the third threshold, it is considered that the trigger condition for the cell reselection is met in the neighboring cell 1 within the time period 1. If it is predicted that, within the time period 1, the sum of the occurrence probability of the RRC connection setup failure in the neighboring cell 1 * w₁ and the occurrence probability of the RLF after the RRC connection setup in the neighboring cell 1 * w₂ is greater than the third threshold, it is considered that the trigger condition for the cell reselection is not met in the neighboring cell 1 within the time period 1. A weight coefficient may be a percentage value or a numeric value, and is not limited.

For example, if the weighted sum of the non-occurrence probabilities that respectively correspond to the plurality of predicted quantities is greater than or equal to the fourth threshold, it is considered that the trigger condition for the cell reselection is met. For example, the plurality of predicted quantities are respectively an RRC connection setup failure in a neighboring cell 1 and an RLF after RRC connection setup in the neighboring cell 1. If it is predicted that, within a time period 1, a sum of a non-occurrence probability of the RRC connection setup failure in the neighboring cell 1 * w₃ and a non-occurrence probability of the RLF after the RRC connection setup in the neighboring cell 1 * w₄ is greater than or equal to the fourth threshold, it is considered that the trigger condition for the cell reselection is met in the neighboring cell 1 within the time period 1. If it is predicted that, within the time period 1, the sum of the non-occurrence probability of the RRC connection setup failure in the neighboring cell 1 * w₃ and the non-occurrence probability of the RLF after the RRC connection setup in the neighboring cell 1 * w₄ is less than the fourth threshold, it is considered that the trigger condition for the cell reselection is not met in the neighboring cell 1 within the time period 1. A weight coefficient may be a percentage value or a numeric value, and is not limited.

For example, during cell reselection R criterion calculation, that is, when the R criterion calculation is performed based on reselection frequency priority information and cell signal quality measured or predicted by the terminal device, the weighted sum of the occurrence probabilities or the non-occurrence probabilities that respectively correspond to the plurality of predicted quantities (for example, the occurrence probability of the RRC connection setup failure in a cell 1 within the time period 1 * w₁ + the occurrence probability of the RLF after the RRC connection setup in the cell 1 within the time period 1 * w₂) or the weighted sum of the non-occurrence probabilities that respectively correspond to the plurality of predicted quantities (for example, the non-occurrence probability of the RRC connection setup failure in a cell 1 within the time period 1 * w₃ + the non-occurrence probability of the RLF after the RRC connection setup in the cell 1 within the time period 1 * w₄) is considered, to perform evaluation and decision of the cell reselection.

Optionally, the second configuration information may be sent or indicated by the first access network device to the terminal device by using a dedicated RRC message. For example, the second configuration information may be sent by the first access network device to the terminal device by using an RRC release message or an RRC release with suspend config message. The RRC release message indicates the terminal device to enter the RRC idle state, and the RRC release with suspend config message indicates the terminal device to enter the RRC inactive state. The second configuration information may alternatively be sent or indicated by the first access network device to the terminal device by using a common RRC message. For example, the second configuration information may be sent by the first access network device to the terminal device by using a SIB message.

S820: The terminal device predicts a second prediction result based on the second configuration information. Specifically, in a case in which the second configuration information includes the initiation condition for predicting the predicted quantity, when the initiation condition for predicting the predicted quantity is met, the terminal device predicts the second prediction result; or in a case in which the second configuration information does not include the initiation condition for predicting the predicted quantity, the terminal device may directly predict the second prediction result based on the second configuration information.

For example, the terminal device predicts the second prediction result based on the second configuration information and input information. The input information includes one or more of a historical second prediction result, historical position information of the terminal device, historical speed information of the terminal device, historical moving path information of the terminal device, or historical primary neighboring cell ephemeris information. Information specifically included in the input information may be configured by a network side (the first access network device) for the terminal device, may be predefined, or may be determined by the terminal device. This is not limited in this application. For example, the terminal device obtains the second prediction result through prediction based on the second configuration information and the input information through AI/ML inference.

Optionally, the second prediction result includes at least one of the following: whether the unintended event occurs, or an occurrence probability of the unintended event, or a non-occurrence probability of the unintended event within the at least one time period in the serving cell and/or the at least one neighboring cell; an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the cell reselection, and a time period in which the trigger condition for the cell reselection is met and that respectively corresponds to each of the at least one second candidate cell, where the serving cell and the at least one neighboring cell include the at least one first candidate cell. Optionally, the time period included in the second prediction result may also be replaced with an earliest or latest time period/time point at which the unintended event occurs/does not occur.

For example, the second configuration information includes the predicted quantity, the initiation condition for predicting the predicted quantity, and the at least one time period for predicting the predicted quantity. The second prediction result includes at least one of the following: whether the unintended event occurs, the occurrence probability of the unintended event, or the non-occurrence probability of the unintended event within the at least one time period in the serving cell and/or the at least one neighboring cell.

For example, the second configuration information includes the predicted quantity, the initiation condition for predicting the predicted quantity, the at least one time period for predicting the predicted quantity, and the trigger condition for the predicted quantity. The second prediction result includes at least one of the following: the identifier of the at least one first candidate cell that meets the trigger condition for the predicted quantity, or the time period in which the trigger condition for the predicted quantity is met and that respectively corresponds to each of the at least one first candidate cell.

For example, the second configuration information includes the predicted quantity, the initiation condition for predicting the predicted quantity, the at least one time period for predicting the predicted quantity, the trigger condition for the predicted quantity, and the trigger condition for the cell reselection. The second prediction result includes at least one of the following: the identifier of the at least one second candidate cell that meets the trigger condition for the cell reselection, or the time period in which the trigger condition for the cell reselection is met and that respectively corresponds to each of the at least one second candidate cell.

In the technical solution provided in this embodiment of this application, the terminal device can predict the second prediction result (whether the unintended event occurs, or an occurrence probability of the unintended event, or a non-occurrence probability of the unintended event within at least one future time period; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the cell reselection, and a time period in which the trigger condition for the cell reselection is met and that respectively corresponds to each of the at least one second candidate cell) based on the second configuration information from a second access network device; and a target cell of the cell reselection can be determined based on the second prediction result, so that the occurrence probability of the unintended event can be reduced in a mobility management process, thereby improving an RRC connection setup success rate/an RRC connection resume success rate, user experience, and network performance.

Optionally, after S820, the terminal device may determine, based on the second prediction result, the target cell for cell reselection and the target time period corresponding to the target cell, and perform reselection to the target cell within the target time period. The following provides an example for description with reference to S830 and S840.

S830: The terminal device determines, based on the second prediction result, a target cell that meets the trigger condition for the predicted quantity and a target time period in which the trigger condition for the predicted quantity is met and that corresponds to the target cell; or determines a target cell that meets the trigger condition for the cell reselection and a target time period in which the trigger condition for the cell reselection is met and that corresponds to the target cell.

S840: The terminal device performs reselection from the serving cell to the target cell within the target time period.

Optionally, if the target cell determined by the terminal device is the serving cell, the terminal device continues to stay in the serving cell within the target time period, and does not perform reselection to another cell.

For example, the second prediction result, predicted by the terminal device based on at least one of the predicted quantity, the initiation condition for predicting the predicted quantity, the at least one time period for predicting the predicted quantity, the trigger condition for the predicted quantity, and the trigger condition for the cell reselection that are included in the second configuration information, includes whether the unintended event occurs, or the occurrence probability of the unintended event, or the non-occurrence probability of the unintended event within the at least one time period in the serving cell and/or the at least one neighboring cell. The terminal device determines, based on the second prediction result and the trigger condition for the predicted quantity, a target cell that meets the trigger condition for the predicted quantity and a target time period in which the trigger condition for the predicted quantity is met and that corresponds to the target cell. The terminal device performs reselection from the serving cell to the target cell within the target time period.

For example, the second prediction result, predicted by the terminal device based on the predicted quantity, the initiation condition for predicting the predicted quantity, the at least one time period for predicting the predicted quantity, and the trigger condition for the predicted quantity that are included in the second configuration information, includes an identifier of at least one first candidate cell that meets the trigger condition for the predicted quantity, and a time period in which the trigger condition for the predicted quantity is met and that respectively corresponds to each of the at least one first candidate cell. The terminal device determines, based on the second prediction result, a target cell from the at least one first candidate cell and a target time period in which the trigger condition for the predicted quantity is met and that corresponds to the target cell. The terminal device performs reselection from the serving cell to the target cell within the target time period.

For example, the second prediction result, predicted by the terminal device based on the predicted quantity, the initiation condition for predicting the predicted quantity, the at least one time period for predicting the predicted quantity, the trigger condition for the predicted quantity, and the trigger condition for the cell reselection that are included in the second configuration information, includes an identifier of at least one second candidate cell that meets the trigger condition for the cell reselection, and a time period in which the trigger condition for the cell reselection is met and that respectively corresponds to each of the at least one second candidate cell. The terminal device determines, based on the second prediction result, a target cell from the at least one second candidate cell and a target time period in which the trigger condition for the cell reselection is met and that corresponds to the target cell. The terminal device performs reselection from the serving cell to the target cell within the target time period.

In this embodiment of this application, the unintended event is used as an example of the predicted quantity. Optionally, the predicted quantity may alternatively be that the unintended event does not occur, for example, the RRC connection setup failure does not occur in the serving cell, the RRC connection resume failure does not occur in the serving cell, the RLF does not occur after the RRC connection setup in the serving cell/the fast RLF does not occur after the RRC connection setup in the serving cell, the RRC connection setup failure does not occur in the neighboring cell, the RRC connection resume failure does not occur in the neighboring cell, the RLF does not occur after the RRC connection setup in the neighboring cell/the fast RLF does not occur after the RRC connection setup in the neighboring cell, or another custom event does not occur. This is not limited in this application.

The foregoing describes the communication methods provided in embodiments of this application. The following describes an execution body for performing the foregoing communication methods.

FIG. 9 is a block diagram of a communication apparatus 900 according to an embodiment of this application. The apparatus may be used in the terminal device in embodiments of this application. The communication apparatus 900 includes:
a transceiver unit 910, configured to receive first configuration information from a first access network device, where the first configuration information includes at least one of: a predicted quantity, an initiation condition for predicting the predicted quantity, at least one time period for predicting the predicted quantity, a trigger condition for the predicted quantity, or a trigger condition for handover, and the predicted quantity includes one of the following unintended events: a radio link failure RLF in a serving cell, a handover failure HOF in at least one neighboring cell, an RLF in the at least one neighboring cell, ping-pong handover in the at least one neighboring cell, or unnecessary handover in the at least one neighboring cell; and
a processing unit 920, configured to predict a first prediction result based on the first configuration information.

Optionally, the transceiver unit 910 is further configured to send the first prediction result to the first access network device. The transceiver unit 910 is further configured to receive a handover command from the first access network device, where the handover command indicates to perform handover to a target cell within a target time period, the at least one neighboring cell includes the target cell, and the at least one time period includes the target time period. The processing unit 920 is further configured to perform handover from the serving cell to the target cell within the target time period based on the handover command.

Optionally, the processing unit 920 is further configured to:
determine, based on the first prediction result, a target cell that meets the trigger condition for the predicted quantity and a target time period in which the trigger condition for the predicted quantity is met and that corresponds to the target cell; or determine a target cell that meets the trigger condition for the handover and a target time period in which the trigger condition for the handover is met and that corresponds to the target cell; and
perform handover from the serving cell to the target cell within the target time period.

Optionally, the first prediction result includes: whether the unintended event occurs, or an occurrence probability of the unintended event, or a non-occurrence probability of the unintended event within the at least one time period in the serving cell and/or the at least one neighboring cell; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the handover, and a time period in which the trigger condition for the handover is met and that respectively corresponds to each of the at least one second candidate cell, where the serving cell and the at least one neighboring cell include the at least one first candidate cell.

Optionally, the initiation condition for predicting the predicted quantity includes: event-triggered one-time prediction, event-triggered periodical prediction, or non-event-triggered periodical prediction.

Optionally, the trigger condition for the predicted quantity includes: the unintended event does not occur, or the occurrence probability of the unintended event is less than or equal to a first threshold, or the non-occurrence probability of the unintended event is greater than or equal to a second threshold.

Optionally, the trigger condition for the handover includes: that one or more predicted quantities correspondingly meet a combination of respective trigger conditions of the predicted quantities; or that a weighted sum of occurrence probabilities that respectively correspond to a plurality of predicted quantities is less than or equal to a third threshold; or that a weighted sum of non-occurrence probabilities that respectively correspond to a plurality of predicted quantities is greater than or equal to a fourth threshold.

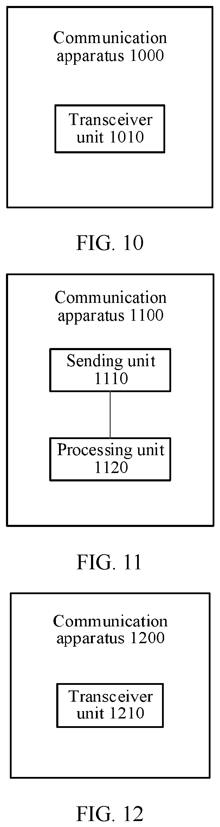

FIG. 10 is a block diagram of a communication apparatus 1000 according to an embodiment of this application. The apparatus may be used in the first access network device in embodiments of this application. The communication apparatus 1000 includes:
a transceiver unit 1010, configured to send first configuration information to a terminal device, where the first configuration information includes at least one of: a predicted quantity, an initiation condition for predicting the predicted quantity, at least one time period for predicting the predicted quantity, a trigger condition for the predicted quantity, or a trigger condition for handover, and the predicted quantity includes one of the following unintended events: an RLF in a serving cell, a HOF in at least one neighboring cell, an RLF in the at least one neighboring cell, ping-pong handover in the at least one neighboring cell, or unnecessary handover in the at least one neighboring cell;
the transceiver unit 1010 is further configured to receive a first prediction result from the terminal device, where the first prediction result is predicted based on the first configuration information; and
the transceiver unit 1010 is further configured to send a handover command to the terminal device based on the first prediction result, where the handover command indicates to perform handover to a target cell within a target time period, the at least one neighboring cell includes the target cell, and the at least one time period includes the target time period.

Optionally, the transceiver unit 1010 is specifically configured to:
send a handover request message to a second access network device, where the handover request message includes a part or all of the first prediction result;
receive a handover request acknowledge message from the second access network device; and
send the handover command to the terminal device, where the handover command includes indication information that indicates to perform handover to the target cell within the target time period.

Optionally, the first prediction result includes: whether the unintended event occurs, or an occurrence probability of the unintended event, or a non-occurrence probability of the unintended event within the at least one time period in the serving cell and/or the at least one neighboring cell; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the handover, and a time period in which the trigger condition for the handover is met and that respectively corresponds to each of the at least one second candidate cell, where the serving cell and the at least one neighboring cell include the at least one first candidate cell.

Optionally, the initiation condition for predicting the predicted quantity includes: event-triggered one-time prediction, event-triggered periodical prediction, or non-event-triggered periodical prediction.

Optionally, the trigger condition for the predicted quantity includes: the unintended event does not occur, or the occurrence probability of the unintended event is less than or equal to a first threshold, or the non-occurrence probability of the unintended event is greater than or equal to a second threshold.

Optionally, the trigger condition for the handover includes: that one or more predicted quantities correspondingly meet a combination of respective trigger conditions of the predicted quantities; or that a weighted sum of occurrence probabilities that respectively correspond to a plurality of predicted quantities is less than or equal to a third threshold; or that a weighted sum of non-occurrence probabilities that respectively correspond to a plurality of predicted quantities is greater than or equal to a fourth threshold.

FIG. 11 is a block diagram of a communication apparatus 1100 according to an embodiment of this application. The apparatus may be used in the terminal device in embodiments of this application. The communication apparatus 1100 includes:
a transceiver unit 1110, configured to receive second configuration information from a first access network device, where the second configuration information includes at least one of: a predicted quantity, an initiation condition for predicting the predicted quantity, at least one time period for predicting the predicted quantity, a trigger condition for the predicted quantity, or a trigger condition for cell reselection, and the predicted quantity includes one of the following unintended events: a radio resource control RRC connection setup failure in a serving cell, an RRC connection resume failure in the serving cell, an RLF after RRC connection setup in the serving cell, an RRC connection setup failure in at least one neighboring cell, an RRC connection resume failure in the at least one neighboring cell, or an RLF after RRC connection setup in the at least one neighboring cell; and
a processing unit 1120, which predicts a second prediction result based on the second configuration information.

Optionally, the processing unit 1120 is further configured to:
determine, based on the second prediction result, a target cell that meets the trigger condition for the predicted quantity and a target time period in which the trigger condition for the predicted quantity is met and that corresponds to the target cell; or determine a target cell that meets the trigger condition for the cell reselection and a target time period in which the trigger condition for the cell reselection is met and that corresponds to the target cell; and
perform reselection from the serving cell to the target cell within the target time period.

Optionally, the second prediction result includes: whether the unintended event occurs, or an occurrence probability of the unintended event, or a non-occurrence probability of the unintended event within the at least one time period in the serving cell and/or the at least one neighboring cell; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the cell reselection, and a time period in which the trigger condition for the cell reselection is met and that respectively corresponds to each of the at least one second candidate cell, where the serving cell and the at least one neighboring cell include the at least one first candidate cell.

Optionally, the initiation condition for predicting the predicted quantity includes: event-triggered one-time prediction, event-triggered periodical prediction, or non-event-triggered periodical prediction.

Optionally, the trigger condition for the predicted quantity includes: the unintended event does not occur, or the occurrence probability of the unintended event is less than or equal to a first threshold, or the non-occurrence probability of the unintended event is greater than or equal to a second threshold.

Optionally, the trigger condition for the cell reselection includes: that one or more predicted quantities correspondingly meet a combination of respective trigger conditions of the predicted quantities; or that a weighted sum of occurrence probabilities that respectively correspond to a plurality of predicted quantities is less than or equal to a third threshold; or that a weighted sum of non-occurrence probabilities that respectively correspond to a plurality of predicted quantities is greater than or equal to a fourth threshold; or that a weighted sum of occurrence probabilities or non-occurrence probabilities that respectively correspond to a plurality of predicted quantities is considered during calculation according to a cell reselection R criterion/S criterion.

FIG. 12 is a block diagram of a communication apparatus 1200 according to an embodiment of this application. The apparatus may be used in the first access network device in embodiments of this application. The communication apparatus 1200 includes:
a transceiver unit 1210, configured to send second configuration information to a terminal device, where the second configuration information includes at least one of: a predicted quantity, an initiation condition for predicting the predicted quantity, at least one time period for predicting the predicted quantity, a trigger condition for the predicted quantity, or a trigger condition for cell reselection, and the predicted quantity includes one of the following unintended events: an RRC connection setup failure in a serving cell, an RRC connection resume failure in the serving cell, an RLF after RRC connection setup in the serving cell, an RRC connection setup failure in at least one neighboring cell, an RRC connection resume failure in the at least one neighboring cell, or an RLF after RRC connection setup in the at least one neighboring cell.

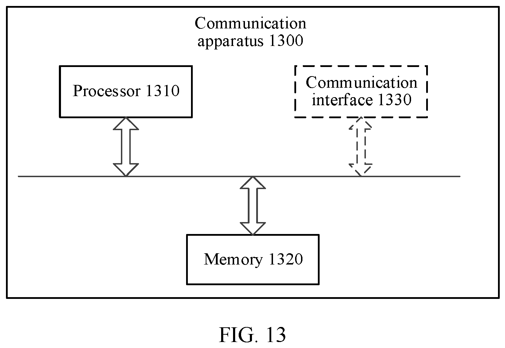

FIG. 13 is a block diagram of another communication apparatus 1300 according to an embodiment of this application. The communication apparatus 1300 includes: a processor 1310, a memory 1320, and a communication interface 1330.

The memory 1320 is configured to store executable instructions.

The processor 1310 is coupled to the memory 1320 through the communication interface 1330. The processor 1310 is configured to invoke and run the executable instructions in the memory 1320, to implement the methods in embodiments of this application. The communication apparatus may be used in the first access network device or the second access network device in embodiments of this application. Optionally, the processor 1310 and the memory 1320 are integrated together.

The foregoing processor 1310 may be an integrated circuit chip and has a signal processing capability. In an implementation process, steps in the foregoing method embodiments may be completed by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

Optionally, an embodiment of this application further provides a communication apparatus. The communication apparatus includes an input/output interface and a logic circuit. The input/output interface is configured to obtain input information and/or output information. The logic circuit is configured to perform the method according to any one of the foregoing method embodiments, and process and/or generate the output information based on the input information.

An embodiment of this application further provides a communication system. The communication system includes the terminal device and the first access network device in the foregoing method embodiments.

An embodiment of this application further provides a computer-readable storage medium. The computer-readable storage medium stores a computer program used to implement the methods in the foregoing method embodiments. When the computer program is run on a computer, the computer is enabled to implement the methods in the foregoing method embodiments.

An embodiment of this application further provides a computer program product. The computer program product includes computer program code. When the computer program code is run on a computer, the methods in the foregoing method embodiments are performed.

An embodiment of this application further provides a chip. The chip includes a processor. The processor is connected to a memory, the memory is configured to store a computer program, and the processor is configured to execute the computer program stored in the memory, to enable the chip to perform the methods in the foregoing method embodiments.

It should be understood that in embodiments of this application, numbers "first", "second", and the like are merely for distinguishing between different objects, for example, for distinguishing between different configuration information or different thresholds, and do not constitute a limitation on the scope of embodiments of this application. Embodiments of this application are not limited thereto.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification generally represents an "or" relationship between associated objects. In this application, the term "at least one" may represent "one" and "two or more". For example, A, B, and C may represent the following seven cases: Only A exists, only B exists, only C exists, both A and B exist, both A and C exist, both C and B exist, and A, B, C all exist.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes outside of the scope of this application.

It may be clearly understood by a person skilled in the art that, for the purpose of convenient and brief description, for a detailed working process of the foregoing system, apparatuses, and units, reference may be made to a corresponding process in the foregoing method embodiments. Details are not described herein again.

In several embodiments provided in this application, it should be understood that the disclosed system, apparatuses, and methods may be implemented in other manners. For example, the foregoing described apparatus embodiments are merely examples. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, various functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device, wherein the method comprises:
receiving first configuration information from a first access network device, wherein the first configuration information comprises at least one of: a predicted quantity, an initiation condition for predicting the predicted quantity, at least one time period for predicting the predicted quantity, a trigger condition for the predicted quantity, or a trigger condition for handover, and the predicted quantity comprises one of the following unintended events: a radio link failure RLF in a serving cell, a handover failure HOF in at least one neighboring cell, an RLF in the at least one neighboring cell, ping-pong handover in the at least one neighboring cell, or unnecessary handover in the at least one neighboring cell; and
predicting a first prediction result based on the first configuration information.

2. The method according to claim 1, wherein the method further comprises:
sending the first prediction result to the first access network device;
receiving a handover command from the first access network device, wherein the handover command indicates to perform handover to a target cell within a target time period, the at least one neighboring cell comprises the target cell, and the at least one time period comprises the target time period; and
performing handover from the serving cell to the target cell within the target time period based on the handover command.

3. The method according to claim 1, wherein the method further comprises:
determining, based on the first prediction result, a target cell that meets the trigger condition for the predicted quantity and a target time period in which the trigger condition for the predicted quantity is met and that corresponds to the target cell; or determining a target cell that meets the trigger condition for the handover and a target time period in which the trigger condition for the handover is met and that corresponds to the target cell; and
performing handover from the serving cell to the target cell within the target time period.

4. The method according to any one of claims 1 to 3, wherein
the first prediction result comprises: whether the unintended event occurs, or an occurrence probability of the unintended event, or a non-occurrence probability of the unintended event within the at least one time period in the serving cell and/or the at least one neighboring cell; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the handover, and a time period in which the trigger condition for the handover is met and that respectively corresponds to each of the at least one second candidate cell, wherein the serving cell and the at least one neighboring cell comprise the at least one first candidate cell.

5. The method according to any one of claims 1 to 4, wherein the initiation condition for predicting the predicted quantity comprises: event-triggered one-time prediction, event-triggered periodical prediction, or non-event-triggered periodical prediction.

6. The method according to any one of claims 1 to 5, wherein the trigger condition for the predicted quantity comprises: the unintended event does not occur, or the occurrence probability of the unintended event is less than or equal to a first threshold, or the non-occurrence probability of the unintended event is greater than or equal to a second threshold.

7. The method according to any one of claims 1 to 6, wherein the trigger condition for the handover comprises: that one or more predicted quantities correspondingly meet a combination of respective trigger conditions of the predicted quantities; or that a weighted sum of occurrence probabilities that respectively correspond to a plurality of predicted quantities is less than or equal to a third threshold; or that a weighted sum of non-occurrence probabilities that respectively correspond to a plurality of predicted quantities is greater than or equal to a fourth threshold.

8. A communication method, applied to a first access network device, wherein the method comprises:
sending first configuration information to a terminal device, wherein the first configuration information comprises at least one of: a predicted quantity, an initiation condition for predicting the predicted quantity, at least one time period for predicting the predicted quantity, a trigger condition for the predicted quantity, or a trigger condition for handover, and the predicted quantity comprises one of the following unintended events: an RLF in a serving cell, a HOF in at least one neighboring cell, an RLF in the at least one neighboring cell, ping-pong handover in the at least one neighboring cell, or unnecessary handover in the at least one neighboring cell;
receiving a first prediction result from the terminal device, wherein the first prediction result is predicted based on the first configuration information; and
sending a handover command to the terminal device based on the first prediction result, wherein the handover command indicates to perform handover to a target cell within a target time period.

9. The method according to claim 8, wherein the sending the handover command to the terminal device based on the first prediction result comprises:
sending a handover request message to a second access network device, wherein the handover request message comprises a part or all of the first prediction result;
receiving a handover request acknowledge message from the second access network device; and
sending the handover command to the terminal device, wherein the handover command comprises indication information that indicates to perform handover to the target cell within the target time period.

10. The method according to claim 8 or 9, wherein
the first prediction result comprises: whether the unintended event occurs, or an occurrence probability of the unintended event, or a non-occurrence probability of the unintended event within the at least one time period in the serving cell and/or the at least one neighboring cell; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the handover, and a time period in which the trigger condition for the handover is met and that respectively corresponds to each of the at least one second candidate cell, wherein the serving cell and the at least one neighboring cell comprise the at least one first candidate cell.

11. The method according to any one of claims 8 to 10, wherein the initiation condition for predicting the predicted quantity comprises: event-triggered one-time prediction, event-triggered periodical prediction, or non-event-triggered periodical prediction.

12. The method according to any one of claims 8 to 11, wherein the trigger condition for the predicted quantity comprises: the unintended event does not occur, or the occurrence probability of the unintended event is less than or equal to a first threshold, or the non-occurrence probability of the unintended event is greater than or equal to a second threshold.

13. The method according to any one of claims 8 to 12, wherein the trigger condition for the handover comprises: that one or more predicted quantities correspondingly meet a combination of respective trigger conditions of the predicted quantities; or that a weighted sum of occurrence probabilities that respectively correspond to a plurality of predicted quantities is less than or equal to a third threshold; or that a weighted sum of non-occurrence probabilities that respectively correspond to a plurality of predicted quantities is greater than or equal to a fourth threshold.

14. A communication apparatus, comprising:
a transceiver unit, configured to receive first configuration information from a first access network device, wherein the first configuration information comprises at least one of: a predicted quantity, an initiation condition for predicting the predicted quantity, at least one time period for predicting the predicted quantity, a trigger condition for the predicted quantity, or a trigger condition for handover, and the predicted quantity comprises one of the following unintended events: a radio link failure RLF in a serving cell, a handover failure HOF in at least one neighboring cell, an RLF in the at least one neighboring cell, ping-pong handover in the at least one neighboring cell, or unnecessary handover in the at least one neighboring cell; and
a processing unit, configured to predict a first prediction result based on the first configuration information.

15. The apparatus according to claim 14, wherein
the transceiver unit is further configured to send the first prediction result to the first access network device;
the transceiver unit is further configured to receive a handover command from the first access network device, wherein the handover command indicates to perform handover to a target cell within a target time period; and
the processing unit is further configured to perform handover from the serving cell to the target cell within the target time period based on the handover command.

16. The apparatus according to claim 14, wherein the processing unit is further configured to:
determine, based on the first prediction result, a target cell that meets the trigger condition for the predicted quantity and a target time period in which the trigger condition for the predicted quantity is met and that corresponds to the target cell; or determine a target cell that meets the trigger condition for the handover and a target time period in which the trigger condition for the handover is met and that corresponds to the target cell; and
perform handover from the serving cell to the target cell within the target time period.

17. The apparatus according to any one of claims 14 to 16, wherein
the first prediction result comprises: whether the unintended event occurs, or an occurrence probability of the unintended event, or a non-occurrence probability of the unintended event within the at least one time period in the serving cell and/or the at least one neighboring cell; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the handover, and a time period in which the trigger condition for the handover is met and that respectively corresponds to each of the at least one second candidate cell, wherein the serving cell and the at least one neighboring cell comprise the at least one first candidate cell.

18. The apparatus according to any one of claims 14 to 17, wherein the initiation condition for predicting the predicted quantity comprises: event-triggered one-time prediction, event-triggered periodical prediction, or non-event-triggered periodical prediction.

19. The apparatus according to any one of claims 14 to 18, wherein the trigger condition for the predicted quantity comprises: the unintended event does not occur, or the occurrence probability of the unintended event is less than or equal to a first threshold, or the non-occurrence probability of the unintended event is greater than or equal to a second threshold.

20. The apparatus according to any one of claims 14 to 19, wherein the trigger condition for the handover comprises: that one or more predicted quantities correspondingly meet a combination of respective trigger conditions of the predicted quantities; or that a weighted sum of occurrence probabilities that respectively correspond to a plurality of predicted quantities is less than or equal to a third threshold; or that a weighted sum of non-occurrence probabilities that respectively correspond to a plurality of predicted quantities is greater than or equal to a fourth threshold.

21. A communication apparatus, comprising:
a transceiver unit, configured to send first configuration information to a terminal device, wherein the first configuration information comprises at least one of: a predicted quantity, an initiation condition for predicting the predicted quantity, at least one time period for predicting the predicted quantity, a trigger condition for the predicted quantity, or a trigger condition for handover, and the predicted quantity comprises one of the following unintended events: an RLF in a serving cell, a HOF in at least one neighboring cell, an RLF in the at least one neighboring cell, ping-pong handover in the at least one neighboring cell, or unnecessary handover in the at least one neighboring cell;
the transceiver unit is further configured to receive a first prediction result from the terminal device, wherein the first prediction result is predicted based on the first configuration information; and
the transceiver unit is further configured to send a handover command to the terminal device based on the first prediction result, wherein the handover command indicates to perform handover to a target cell within a target time period.

22. The apparatus according to claim 21, wherein the transceiver unit is specifically configured to:
send a handover request message to a second access network device, wherein the handover request message comprises a part or all of the first prediction result;
receive a handover request acknowledge message from the second access network device; and
send the handover command to the terminal device, wherein the handover command comprises indication information that indicates to perform handover to the target cell within the target time period.

23. The apparatus according to claim 21 or 22, wherein
the first prediction result comprises: whether the unintended event occurs, or an occurrence probability of the unintended event, or a non-occurrence probability of the unintended event within the at least one time period in the serving cell and/or the at least one neighboring cell; or an identifier of at least one first candidate cell that meets the trigger condition for the predicted quantity, and a time period in which the trigger condition for the predicted quantity is met and that respectively corresponds to each of the at least one first candidate cell; or an identifier of at least one second candidate cell that meets the trigger condition for the handover, and a time period in which the trigger condition for the handover is met and that respectively corresponds to each of the at least one second candidate cell, wherein the serving cell and the at least one neighboring cell comprise the at least one first candidate cell.

24. The apparatus according to any one of claims 21 to 23, wherein the initiation condition for predicting the predicted quantity comprises: event-triggered one-time prediction, event-triggered periodical prediction, or non-event-triggered periodical prediction.

25. The apparatus according to any one of claims 21 to 24, wherein the trigger condition for the predicted quantity comprises: the unintended event does not occur, or the occurrence probability of the unintended event is less than or equal to a first threshold, or the non-occurrence probability of the unintended event is greater than or equal to a second threshold.

26. The apparatus according to any one of claims 21 to 25, wherein the trigger condition for the handover comprises: that one or more predicted quantities correspondingly meet a combination of respective trigger conditions of the predicted quantities; or that a weighted sum of occurrence probabilities that respectively correspond to a plurality of predicted quantities is less than or equal to a third threshold; or that a weighted sum of non-occurrence probabilities that respectively correspond to a plurality of predicted quantities is greater than or equal to a fourth threshold.

27. A communication apparatus, comprising a processor and a memory, wherein the memory is configured to store a computer program, and the processor is configured to execute the computer program stored in the memory, to enable the communication apparatus to perform the method according to any one of claims 1 to 13.

28. A communication apparatus, comprising an input/output interface and a logic circuit, wherein
the input/output interface is configured to obtain input information and/or output information; and
the logic circuit is configured to: perform the method according to any one of claims 1 to 13, and process the input information and/or generate the output information.

29. A communication system, comprising a terminal device and a first access network device, wherein the terminal device is configured to implement the method according to any one of claims 1 to 7, and the first access network device is configured to implement the method according to any one of claims 8 to 13.

30. A computer-readable storage medium, wherein
the computer-readable medium stores a computer program; and
when the computer program is run on a computer, the computer is enabled to perform the method according to any one of claims 1 to 13.

31. A computer program product, comprising a computer program, wherein when the computer program is executed, the method according to any one of claims 1 to 13 is implemented.
